# EUROPEAN PATENT SPECIFICATION

(11) **EP 4 401 535 B1**
(45) Date of publication and mention of the grant of the patent: **11.02.2026**
(21) Application number: 23822221.0
(22) Date of filing: 30.11.2023
(51) Int. Cl.: H10K 59/80, H10K 77/10, G09F 9/30, H04M 1/02, H10K 50/84, H10K 102/00

(54) **FOLDABLE ELECTRONIC APPARATUS**
FALTBARE ELEKTRONISCHE VORRICHTUNG
APPAREIL ÉLECTRONIQUE PLIABLE

(30) Priority: 30.11.2022 KR 20220164857; 19.12.2022 KR 20220178486; 20.07.2023 KR 20230094865
(43) Date of publication of application: 17.07.2024
(73) Proprietor: Samsung Electronics Co., Ltd., Suwon-si, Gyeonggi-do 16677 (KR)
(72) Inventor: HYUN, Kyunghoon, Suwon-si, Gyeonggi-do 16677 (KR); BAE, Chulho, Suwon-si, Gyeonggi-do 16677 (KR); YUN, Sunpyo, Suwon-si, Gyeonggi-do 16677 (KR); LEE, Sungjae, Suwon-si, Gyeonggi-do 16677 (KR); HA, Hojong, Suwon-si, Gyeonggi-do 16677 (KR)
(74) Representative: Gulde & Partner
(86) International application number: PCT/KR2023/019594
(87) International publication number: WO 2024/117825

(56) References cited:
- EP-A1- 3 993 372
- KR-A- 20200 100 490
- KR-A- 20200 127 617
- KR-A- 20210 050 040
- KR-A- 20210 157 226
- US-A1- 2020 060 020
- US-A1- 2021 247 806

## Description

### [Technical Field]

The disclosure relates to a foldable electronic device.

### [Background Art]

A foldable electronic device may include a flexible printed circuit board extending across a hinge.

The above-mentioned information may be provided as a related art for the purpose of helping understanding of the disclosure. No claim or determination is made as to whether any of the foregoing may be applied as a prior art related to the disclosure.

US 2021/247806 A1 provides a foldable electronic device including a hinge structure, a foldable housing, a flexible display disposed inside the foldable housing, a first flexible connection member, a second flexible connection member, an adhesive member attached to the first flexible connection member. The foldable housing includes a first housing structure and a second housing structure. The first housing structure includes a first surface, a second surface, and a first printed circuit board. The second housing structure includes a third surface, a fourth surface, and a second printed circuit board.

US 2020/060020 A1 discloses a foldable electronic device comprising a display, a cover covering one or more hinges, and a flexible printed circuit board disposed between the flexible display and the cover, wherein the flexible printed circuit board includes, a cover section accommodated in the cover, a first connection section extending to a first side of the cover section, and a second connection section extending to a second side of the cover section, wherein the cover section includes a first fixing area extending from the first connection section and configured to fix an area of the flexible printed circuit board to the electronic device, a second fixing area extending from the second connection section and configured to fix another area of the flexible printed circuit board to the electronic device, and a deformable area disposed between the first fixing area and the second fixing area, and wherein a number of multiple conductive layers forming the first fixing area and a number of conductive layers forming the second fixing area are equal to each other, and a number of multiple conductive layers forming the deformable area and the number of multiple conductive layers forming the first fixing area are different from each other.

### [Disclosure of Invention]

### [Technical Problem]

When a foldable electronic device switches from an unfolded state to a folded state, a hinge may cause damage or cracks in a flexible printed circuit board disposed across the hinge.

Various embodiments of the disclosure may provide a foldable electronic device in which damage to a flexible printed circuit board by a hinge is reduced or prevented.

The technical problems to be addressed by the disclosure are not limited to those described above, and other technical problems, which are not described above, will be understood by a person ordinarily skilled in the related art, to which this disclosure belongs.

### [Solution to Problem]

The present invention is set out in the appended set of claims.

According to an aspect of the disclosure, a foldable electronic device includes a foldable housing and a flexible printed circuit board. The foldable housing includes a first housing, a second housing, and a hinge configured to interconnect the first housing and the second housing. The flexible printed circuit board extends across the hinge. The hinge includes a first plate and a second plate. The first plate includes a first end portion including a first curved surface configured to support the flexible printed circuit board when the foldable housing is in the folded state. The second plate includes a second end portion including a second curved surface configured to support the flexible printed circuit board when the foldable housing is in the folded state.

In one embodiment, the foldable electronic device further includes a flexible display module disposed in the foldable housing. The flexible display module includes a first display area disposed on the first housing, a second display area disposed on the second housing, and a third display area extending the first display area and the second display. In the folded state, the first display area and the second display area face each other, and the third display area is bent. The hinge is configured such that, in an unfolded state, the first plate and the second plate support the third display area flat. Further, the hinge is configured such that, in the folded state, the first plate and the second plate face each other with the third display area interposed therebetween.

In one embodiment, the hinge is configured such that, in the folded state, the first plate and the second plate are arranged in parallel to each other.

In one embodiment, the flexible display module is arranged flat in a first direction when viewed in a direction of a folding axis of the foldable housing in an unfolded state of the foldable housing The hinge is configured such that, when viewed in the direction of the folding axis when the foldable housing is in the folded state, the first plate and the second plate form an acute angle with respect to a second direction that is perpendicular to the first direction and is directed from the first and second display areas toward the third display area. When the device is in the folded state, a space between the first plate and the second plate widens in the second direction.

In one embodiment, the first end portion and the second end portion face each other and are closer to each other in an unfolded state than in the folded state.

In one embodiment, the flexible printed circuit board includes: a first rigid portion located between the first plate and the first housing; a second rigid portion located between the second plate and the second housing; a first connector electrically connected to a first element located in the first housing; a second connector electrically connected to a second element located in the second housing; a first area extending the first rigid portion and the first connector; a second area extending the second rigid portion and the second connector; and a third area extending the first rigid portion and the second rigid portion and extending across the hinge.

In one embodiment, the first rigid portion is coupled to the first housing, and the second rigid portion is coupled to the second housing.

In one embodiment, the first rigid portion is coupled to the first plate, and the second rigid portion is coupled to the second plate.

In one embodiment, the foldable electronic device further includes: a third plate located at least partially between the first plate and the first housing and coupled to the first plate; and a fourth plate located at least partially between the second plate and the second housing and coupled to the second plate, wherein the first rigid portion is inserted into an opening in the third plate and coupled to the first plate, and wherein the second rigid portion is inserted into an opening in the fourth plate and coupled to the second plate.

In one embodiment, the first plate and the third plate are coupled through welding, wherein the second plate and the fourth plate are coupled through welding, wherein the first plate is coupled to the first housing through screw fastening, and wherein the second plate is coupled to the second housing through screw fastening.

In one embodiment, the first end portion is disposed to, in the folded state, surround a third end portion of the third plate to have the first curved surface configured to support the flexible printed circuit board, and wherein the second end portion is disposed to, in the folded state, surround a fourth end portion of the fourth plate to have the second curved surface configured to support the flexible printed circuit board.

In one embodiment, the first end portion includes a first bent portion and a second bent portion which are bent in opposite directions to have the first curved surface configured to support the flexible printed circuit board in the folded state, and wherein the second end portion includes a third bent portion and a fourth bent portion which are bent in opposite directions to have the second curved surface configured to support the flexible printed circuit board in the folded state.

In one embodiment, a width of the first end portion or the second end portion extending in the direction of the folding axis is configured to be greater than a width of the third area extending in the direction of the folding axis.

In one embodiment, the first curved surface and the second curved surface are formed symmetrically with respect to the folding axis of the foldable housing.

In one embodiment, the hinge includes a first hinge module, a second hinge module, and a third hinge module between the first hinge module and the second hinge module, and wherein the first plate and the second plate are located at least between the first hinge module and the third hinge module.

### [Advantageous Effects of Invention]

In the foldable electronic device according to various embodiments of the disclosure, it is possible to suppress or prevent damage to the flexible printed circuit board disposed across the hinge by the hinge when the foldable electronic device switches from the unfolded state to the folded state.

In addition, effects that may be obtained or predicted by various embodiments of the disclosure may be directly or implicitly disclosed in the detailed description of the embodiments of the disclosure.

### [Brief Description of Drawings]

The above and other aspects, features, and advantages of specific embodiments of the disclosure will become more apparent from the following detailed description taken in conjunction with the accompanying drawings.
FIG. 1 is a view illustrating appearances of a foldable electronic device according to an embodiment of the disclosure in an unfolded state.
FIG. 2 is a view illustrating appearances of the foldable electronic device according to an embodiment of the disclosure in a folded state.
FIG. 3 is a cross-sectional view of the foldable electronic device according to an embodiment of the disclosure taken along line D-D' in FIG. 1.
FIG. 4 is an exploded perspective view illustrating the foldable electronic device according to an embodiment of the disclosure.
FIGS. 5 and 6 are views illustrating a foldable housing according to an embodiment of the disclosure in an unfolded state.
FIG. 7 is a diagram illustrating a portion of the foldable electronic device according to an embodiment of the disclosure in the unfolded state.
FIG. 8 is a cross-sectional view of the foldable electronic device according to an embodiment of the disclosure in the unfolded state taken along line E-E' in FIG. 7.
FIG. 9 is a cross-sectional view of the electronic device according to an embodiment of the disclosure.
FIGS. 10 and 11 are views illustrating a second plate assembly according to an embodiment of the disclosure.
FIG. 12 is a cross-sectional view of the second plate assembly according to an embodiment of the disclosure taken along line G-G' in FIG. 10.
FIG. 13 is a view illustrating a manufacturing flow of the second plate assembly according to an embodiment of the disclosure.
FIG. 14 is a view illustrating a second plate assembly according to an embodiment of the disclosure.
FIG. 15 is an exploded perspective view illustrating the second plate assembly according to an embodiment of the disclosure.
FIG. 16 is a cross-sectional view of the second plate assembly according to an embodiment of the disclosure taken along line H-H' in FIG. 14.
FIG. 17 is a cross-sectional view of the second plate assembly according to an embodiment of the disclosure taken along line I-I' in FIG. 14.
FIG. 18 is a cross-sectional view of a portion of the foldable electronic device according to an embodiment of the disclosure in the unfolded state taken along line D-D' in FIG. 1.
FIG. 19 is a cross-sectional view of a portion of the foldable electronic device according to an embodiment of the disclosure in the unfolded state taken along line E-E' in FIG. 2.

### [Mode for the Invention]

Hereinafter, various embodiments of the disclosure will be described with reference to the accompanying drawings.

It should be appreciated that various embodiments of the disclosure and the terms used therein are not intended to limit the technological features set forth herein to particular embodiments and include various changes or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly or indirectly (e.g., via a third element).

The term "module" may be a minimum unit of a single integrated component adapted to perform one or more functions, or a part thereof.

Each element (e.g., a module or a program) of the above-described elements may include a single entity or multiple entities. One or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration.

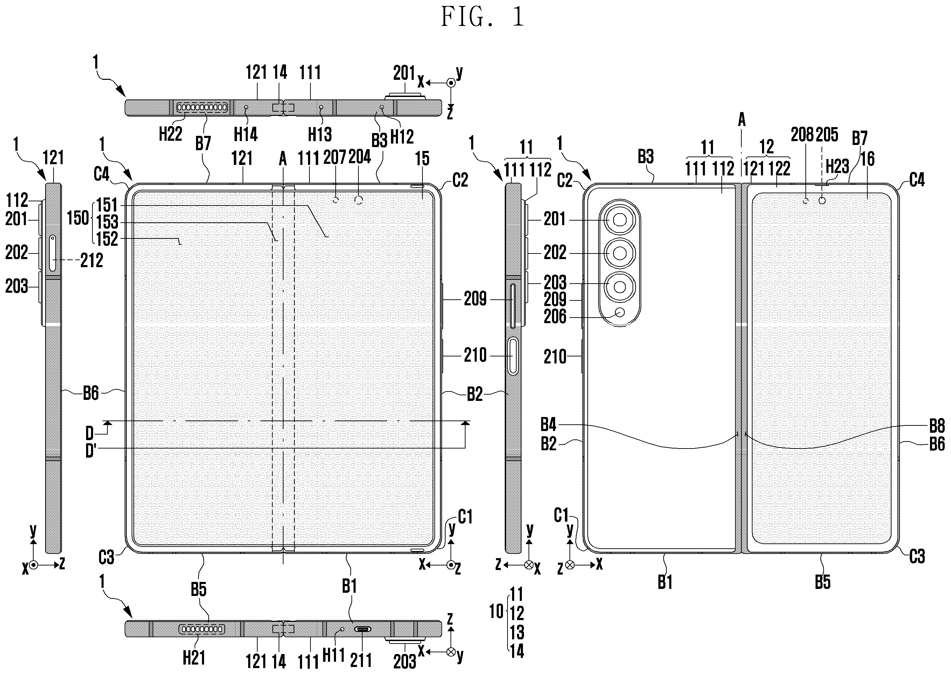

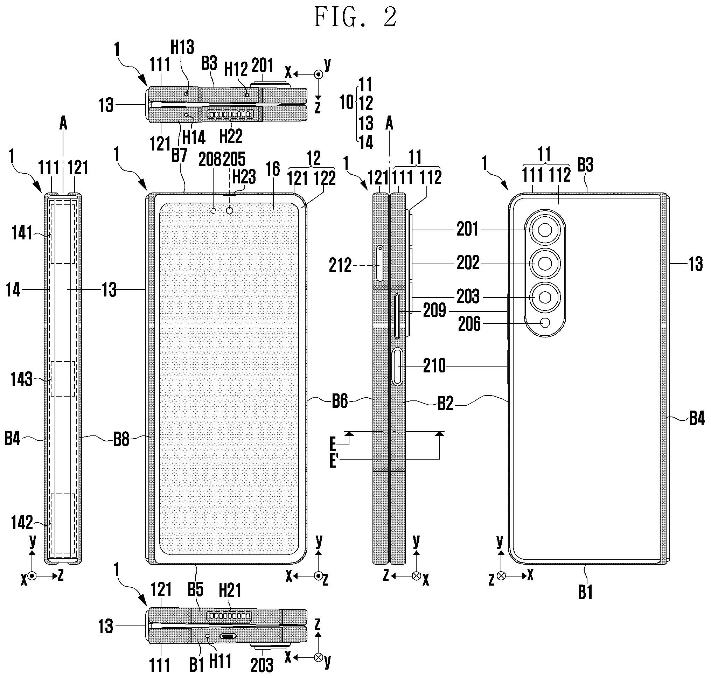

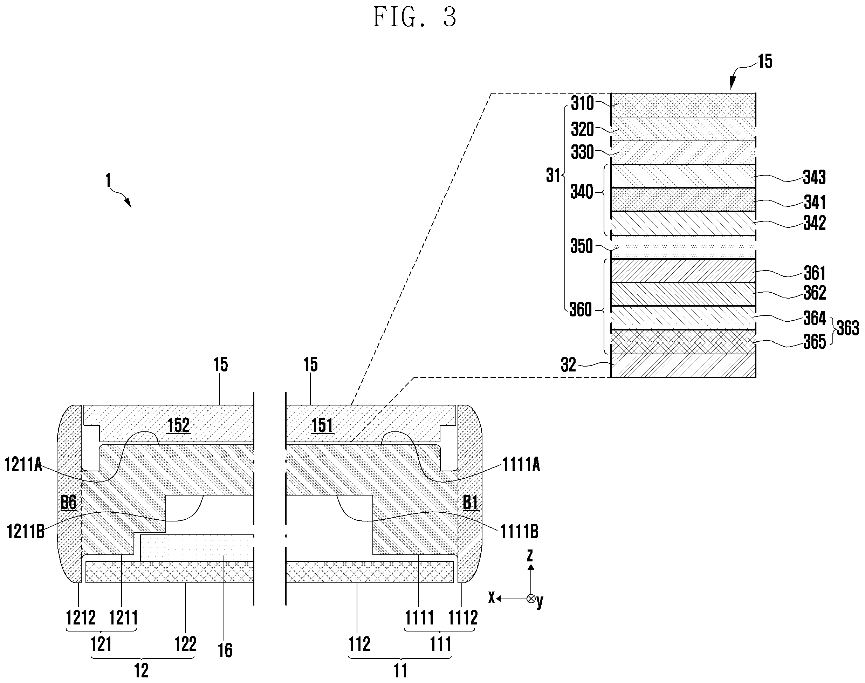

FIG. 1 is a view illustrating appearances of a foldable electronic device 1 according to an embodiment of the disclosure in an unfolded state (also referred to as a flat state). FIG. 2 is a view illustrating appearances of the foldable electronic device 1 according to an embodiment of the disclosure in a folded state (also referred to as a folding state). FIG. 3 is a cross-sectional view of the foldable electronic device 1 according to an embodiment of the disclosure taken along line D-D' in FIG. 1.

Referring to FIGS. 1, 2, and 3, the foldable electronic device 1 includes a foldable housing 10, a first display module 15, a second display module 16, a first camera module 201, a second camera module 202, a third camera module 203, a fourth camera module 204, a fifth camera module 205, a light-emitting module 206, a sensor module 207, a first audio input module (not separately illustrated), a second audio input module (not separately illustrated), a third audio input module (not separately illustrated), a fourth audio input module (not separately illustrated), a first audio output module (not separately illustrated), a second audio output module (not separately illustrated), a third audio output module (not separately illustrated), a key input module, a first connection terminal 211, and/or a second connection terminal 212.

The unfolded state and the folded state of the foldable electronic device 1 are substantially provided by the foldable housing 10. The "unfolded state of the foldable electronic device 1" and the "unfolded state of the foldable housing 10" described herein may be interpreted as being substantially the same. The "folded state of the foldable electronic device 1" and the "folded state of the foldable housing 10" described herein may be interpreted as being substantially the same.

The foldable housing 10 includes a first housing (also referred to as a first housing portion or a first housing structure) 11, a second housing (also referred to as a second housing portion or a second housing structure) 12, a hinge housing 13, and/or a hinge 14. The first housing 11 and the second housing 12 are connected to each other via the hinge 14. The first housing 11 and the second housing 12 are mutually rotatable with respect to the hinge 14. The hinge 14 includes, for example, one or more hinge modules (also referred to as hinge assemblies) (e.g., a first hinge module 141, a second hinge module 142, and/or a third hinge module 143).

The first display module 15 may be disposed in the foldable housing 10. The first display module 15 may include, for example, a flexible display module (also referred to as a flexible display) or a foldable display module (also referred to as a foldable display) that is deformable in response to the switching of the foldable electronic device 1 between the unfolded state and the folded state.

The first display module 15 may include a display area 150. The display area 150 may include an active area or a screen area that is capable of displaying an image based on electrical signals. The display area 150 may include a first display area 151 corresponding to the first housing 11, a second display area 152 corresponding to the second housing 12, and a third display area 153 corresponding to the hinge 14. The third display area 153 may extend the first display area 151 and the second display area 152.

The first display area 151 may be disposed in the first housing 11. The shape of the first display area 151 may be maintained by the support of the first housing 11. For example, the first display area 151 may be provided (or formed) substantially flat by being supported by the first housing 11.

The second display area 152 may be disposed in the second housing 12. The shape of the second display area 152 may be maintained by the support of the second housing 12. For example, the second display area 152 may be provided (or formed) substantially flat by being supported by the second housing 11.

The third display area 153 may be located corresponding to the hinge 14. When the foldable electronic device 1 switches between the unfolded state and the folded state, the third display area 153 may be deformed corresponding to the relative position between the first display area 151 and the second display area 152. In the unfolded state of the foldable electronic device 1, the third display area 153 may be arranged substantially flat. In the folded state of the foldable electronic device 1, the third display area 153 may be arranged in a bent shape. The unfolded state of the foldable electronic device 1 may be defined or interpreted as a state in which the third display area 153 is arranged flat. The folded state of the foldable electronic device 1 may be defined or interpreted as a state in which the third display area 153 is arranged in the bent shape.

In the unfolded state of the foldable electronic device 1, the first display area 151 and the second display area 152 may form an angle of about 180 degrees therebetween, and the display area 150 may be provided (or arranged) in a substantially flat form. Due to the relative position between the first display area 151 disposed in the first housing 11 and the second display area 152 disposed in the second housing 12 in the unfolded state of the foldable electronic device 1, the third display area 153 may be arranged flat. In the unfolded state of the foldable electronic device 1, the third display area 153 may be pulled from opposite sides by the first display area 151 and the second display area 152, and the pulling force may be provided to reduce damage to the third display area 153 while causing the display area 153 to be arranged flat. In the unfolded state of the foldable device 1, the third display area 153 may be provided (formed) with an extended width that may be pulled by the first display area 151 and the second display area 152 and arranged flat while reducing stress.

In the unfolded state of the foldable electronic device 1, the hinge 14 may support the third display area 153 of the first display module 15 to be substantially flat. For example, in the unfolded state of the foldable electronic device 1, the hinge 14 may support the third display area 153 so that the third display area 153 can be arranged flat without sagging or with reduced sagging, thereby reducing a crease phenomenon.

When an external force (e.g., an external pressure such as a touch input using a user's finger or a touch input using an electronic pen) is applied to the third display area 153 in the unfolded state of the foldable electronic device 1, the hinge 14 may support the third display area 153 to be maintained flat by reducing sagging of the third display area 153.

The hinge 14 may be configured to reduce or absorb an external impact to prevent an external impact from affecting the third display area 153 when the external impact is applied due to, for example, falling while the foldable electronic device 1 is in the unfolded state.

The foldable electronic device 1 may be implemented in an infolding type in which the display area 150 of the first display module 15 (or the front of the foldable electronic device 1 where the display area 150 is visually visible) can be folded inward. FIG. 2 illustrates the fully folded state of the foldable electronic device 1 in which the first housing 11 and the second housing 12 are arranged such that the first and second housings do not come closer to each other. In the fully folded state of the foldable electronic device 1, the first display area 151 and the second display area 152 (or the first front surface area and the second front surface area) may face each other. For example, in the fully folded state of the foldable electronic device 1, the angle between the first housing 11 and the second housing 12 (or the angle between the first display area 151 and the second display area 152 or the angle between the first front surface area and the second front surface area) may range from about 0 degrees to about 10 degrees. In the fully folded state of the foldable electronic device 1, the display area 150 may be substantially invisible.

Although not separately illustrated, the foldable electronic device 1 may be placed in an intermediate state between the unfolded state and the fully folded state. For example, in the intermediate state of the foldable electronic device 1 where the angle between the first housing 11 and the second housing 12 is greater than or equal to a certain angle, the foldable electronic device 1 may be configured to provide a use environment in which a user is capable of using the display area 150.

Hereinafter, the "folded state of the foldable electronic device 1" of the disclosure may refer to a fully folded state as opposed to the intermediate state.

The display area 150 of the first display module 15 may provide (or form) substantially the front surface in the exterior of the foldable electronic device 1. The front surface of the foldable electronic device 1 includes a first front surface area provided (or formed) by the first display area 151, a second front surface area provided (or formed) by the second display area 152, and a third front surface area provided (or formed) by the third display area 153. The illustrated coordinate axes of the foldable electronic device 1 are indicated, for example, based on the first housing 11, wherein the +z-axis direction may be defined or interpreted as a direction where the substantially flat first front surface area is oriented. In the unfolded state of the foldable electronic device 1, the front surface of the foldable electronic device 1 may be provided (or formed) as a substantially flat surface.

When the foldable electronic device 1 is viewed in the unfolded state, the display area 150 of the first display module 15 may be provided (or formed) in a symmetrical shape with respect to the center line A of the foldable electronic device 1. The center line A of the foldable electronic device 1 may correspond to the center of the width of the third display area 153 extending from a first boundary between the first display area 151 and the third display area 153 to a second boundary between the second display area 151 and the third display area 153 when the foldable electronic device 1 is viewed in the unfolded state. The illustrated +x coordinate axis may, for example, be substantially perpendicular to the center line A, and the illustrated +y coordinate axis may be substantially parallel to the center line A. For example, in the front surface of the foldable electronic device 1 provided (or formed) by the first display area 151, the first front surface area provided (or formed) by the first display area 151 may be substantially parallel to the x-y plane.

According to various embodiments, the center line A of the foldable electronic device 1 may be defined or interpreted as a "folding axis" of the foldable housing 10 or the foldable electronic device 1. The folding axis may be substantially provided (or formed) by the hinge 14.

The third display area 153 arranged in a bent shape in the folded state of the foldable electronic device 1 may be provided in a substantially symmetrical shape with reference to the center line A of the foldable electronic device 1.

When the foldable electronic device 1 is viewed in the unfolded state, the display area 150 of the first display module 15 may have a substantially rectangular shape.

The first housing 11 may include a first frame (also referred to as a first frame structure or a first framework) 111, and a first cover 112 disposed on (or coupled) to the first frame 111. The combination of the first frame 111 and the first cover 112 may provide (or form) a first rear surface area and a first side surface area in the exterior of the foldable electronic device 1. The first frame 111 may provide (or form) at least a portion of the first side surface area of the foldable electronic device 1. The first cover 112 may provide (or form) at least a portion of the first rear surface area of the foldable electronic device 1. The first rear surface area may be oriented in a direction opposite to the first front surface area of the foldable electronic device 1 provided (or formed) by the first display area 151 of the first display module 15.

The first frame 111 may include a first side (also referred to as a first side surface member, a first side surface structure, or a first side surface bezel structure) 1112. The first side 1112 may surround at least a portion of the space between the first display area 151 and the first cover 112, and may provide (or form) at least a portion of the first side surface area in the exterior of the foldable electronic device 1.

The first frame 111 may include a first support plate (also referred to as a first support portion or a first support member) 1111 extending from the first side 1112 or connected to the first side 1112. The first support plate 1111 may be a structural element located inside the foldable electronic device 1 to correspond to the first housing 11.

The first frame 111 may be provided (formed) as an integrated or single structure (e.g., a single continuous structure or complete structure) including the first support plate 1111 and the first side 1112.

The first frame 111 may be provided as a combination of a conductor (or a metal body) (not separately illustrated) including one or more conductive portions and a non-conductor (or a non-metal body) (not separately illustrated) including one or more non-conductive portions.

The first support plate 1111 may be at least partially located between the first display area 151 and the first cover 112. The first display area 151 may be disposed on the first support plate 1111, and the first support plate 1111 may support the first display area 151.

At least some of various electrical components (not separately illustrated), such as a first printed circuit board or a first battery, may be disposed on the first support frame 1111 of the first frame 111 between the first frame 111 and the first cover 112.

Electrical components (or electronic components) or various members associated to the electrical components may be disposed on the first frame 111 or the first support plate 1111 or may be supported by the first frame 111 or the first support plate 1111. The first support plate 111 may include, for example, a first support area (also referred to as a first support surface) 1111A and a third support area (also referred to as a third support surface) 1111B. The first support area 1111A may substantially face the first display area 151 of the first display module 15. The third support area 1111B may be located on the opposite side from the first support area 1111A. The third support area 1111B may substantially face the first cover 112. The electrical components (or electronic components) or various members associated with the electrical components may be disposed in the first support area 1111A and/or the third support area 1111B or may be supported by the first support area 1111A and/or the third support area 1111B.

The second housing 12 may include a second frame (also referred to as a second frame structure or a second framework) 121, and/or a second cover 122 disposed on the second frame 121. The combination of the second frame 121 and the second cover 122 may provide (or form) a second rear surface area and a second side surface area in the exterior of the foldable electronic device 1. The second frame 121 may provide (or form) at least a portion of the second side surface area of the foldable electronic device 1. The second cover 122 may provide (or form) at least a portion of the second rear surface area of the foldable electronic device 1. The second rear surface area may be oriented in a direction opposite to the second front surface area of the foldable electronic device 1 provided (or formed) by the second display area 152.

The second frame 121 may include a second side (also referred to as a second side surface member, a second side surface structure, or a second side surface bezel structure) 1212. The second side 1212 may surround at least a portion of the space between the second display area 152 and the second cover 122, and may provide (or form) at least a portion of the second side surface area in the exterior of the foldable electronic device 1.

The second frame 121 may include a second support plate (also referred to as a second support portion or a second support member) 1211 extending from the second side 1212 or connected to the second side 1212. The second support plate 1211 may be a structural element located inside the foldable electronic device 1 to correspond to the first housing 12.

The second frame 121 may be provided (formed) as an integrated or single structure (e.g., a single continuous structure or complete structure) including the second support plate 1211 and the second side 1212.

The second frame 121 may be provided as a combination of a conductor (or a metal body) (not separately illustrated) including one or more conductive portions and a non-conductor (or a non-metal body) (not separately illustrated) including one or more non-conductive portions.

The second support plate 1211 may be at least partially located between the second display area 152 and the second cover 122. The second display area 152 may be disposed on the second support plate 1211, and the second support plate 1211 may support the second display area 152.

At least some of various electrical components (not separately illustrated), such as a second printed circuit board or a second battery, may be disposed on the second support frame 1211 of the second frame 121 between the second frame 121 and the second cover 122.

The electrical components (or electronic components) or various members associated to the electrical components may be disposed on the second frame 121 or the second support plate 1211 or may be supported by the second frame 121 or the second support plate 1211. The second support plate 121 may include, for example, a second support area (also referred to as a second support surface) 1211A and a fourth support area (also referred to as a fourth support surface) 1211B. The second support area 1211A may substantially face the second display area 152 of the first display module 15. The fourth support area 1211B may be located on the opposite side from the second support area 1211A. The fourth support area 1211B may substantially face the second cover 122. The electrical components (or electronic components) or various members associated with the electrical components may be disposed in the second support area 1211A and/or the fourth support area 1211B or may be supported by the second support area 1211A and/or the fourth support area 1211B.

The first side 1112 of the first frame 111 may include a first side surface portion B1, a second side surface portion B2, a third side surface portion B3, and/or a fourth side surface portion B4. The first side surface portion B1 may extend in a direction perpendicular to the center line A of the foldable electronic device 1. The third side surface portion B3 may be spaced apart from the first side surface portion B1 in the direction of the center line A of the foldable electronic device 1 and may be substantially parallel to the first side surface portion B1. The second side surface portion B2 may extend or interconnect one end portion of the first side surface portion B1 and one end portion of the third side surface portion B3. The fourth side surface portion B4 may extend or interconnect the other end portion of the first side surface portion B1 and the other end portion of the third side surface portion B3. The second side surface portion B2 and the fourth side surface portion B4 may be substantially parallel to each other. The fourth side surface portion B4 may be located closer to the center line A of the foldable electronic device 1 than the second side surface portion B2.

A first corner C1 where the first side surface area B1 and the second side surface area B2 are extended or connected, and/or a second corner C2 where the second side surface portion B2 and the third side surface portion B3 are extended or connected may be provided (or formed) in a smooth curved shape.

When viewed from above the first cover 112, the first side surface portion B1, the second side surface portion B2, the third side surface portion B3, and the fourth side surface portion B4 may surround the first cover 112.

The second side 1212 of the second frame 121 may include a fifth side surface portion B5, a sixth side surface portion B6, a seventh side surface portion B7, and/or an eighth side surface portion B8. The fifth side surface portion B5 may extend in a direction perpendicular to the center line A of the foldable electronic device 1. The seventh side surface portion B7 may be spaced apart from the fifth side surface portion B5 in the direction of the center line A of the foldable electronic device 1 and may be substantially parallel to the fifth side surface portion B5. The sixth side surface portion B6 may extend or interconnect one end portion of the fifth side surface portion B5 and one end portion of the seventh side surface portion B7. The eighth side surface portion B8 may extend or interconnect the other end portion of the fifth side surface portion B5 and the other end portion of the seventh side surface portion B7. The sixth side surface portion B6 and the eighth side surface portion B8 may be substantially parallel to each other. The eight side surface portion B8 may be located closer to the center line A of the foldable electronic device 1 than the sixth side surface portion B6.

A third corner C3 where the fifth side surface area B5 and the sixth side surface area B6 are extended or connected, and/or a fourth corner C4 where the sixth side surface portion B6 and the seventh side surface portion B7 are extended or connected may be provided (or formed) in a smooth curved shape.

When viewed from above the second cover 122, the fifth side surface portion B5, the sixth side surface portion B6, the seventh side surface portion B7, and the eighth side surface portion B8 may surround the second cover 222.

In the folded state of the foldable electronic device 1, the first side 1112 of the first frame 111 and the second side 1212 of the second frame 121 may be aligned with and overlap each other. In the folded state of the foldable electronic device 1, the first side surface portion B1 and the fifth side surface portion B5 may be aligned with and overlap each other. In the folded state of the foldable electronic device 1, the second side surface portion B2 and the sixth side surface portion B6 may be aligned with and overlap each other. In the folded state of the foldable electronic device 1, the third side surface portion B3 and the seventh side surface portion B7 may be aligned with and overlap each other.

The first side surface portion B1, the third side surface portion B3, and the fourth side surface portion B4 may be one side bezel (or screen bezel) surrounding one side area of the first display module 15 with respect to the center line A of the foldable electronic device 1. The fifth side surface portion B5, the seventh side surface portion B7, and the eighth side surface portion B8 may be the other side bezel (or screen bezel) surrounding the other side area of the first display module 15 with respect to the center line A of the foldable electronic device 1.

The fourth side surface portion B4 and the eighth side surface portion B8 may be located on opposite sides of the third display area 153. When viewed from above the front surface of the foldable electronic device 1 in the unfolded state, the fourth side surface portion B4 and the eighth side surface portion B8 may not be visible.

The hinge housing (also referred to as a hinge cover) 13 may include one or more hinge modules included in the hinge 14 (e.g., a first hinge module 141, a second hinge module 142, and a third hinge module 143).

When the foldable electronic device 1 switches from the unfolded state to the folded state, a gap between the first frame 111 and the second frame 121 may open on the opposite side of the third display area 153 due to a change in the relative position between the first frame 111 and the second frame 121 connected via the hinge 14 and a change in the state of the hinge 14 coupled with the hinge housing 13. The hinge housing 13 may be exposed to the outside through the open gap. For example, in the folded state of the foldable electronic device 1, the hinge housing 13 may be exposed to the outside through the open gap between the fourth side surface portion B4 of the first frame 111 and the eighth side surface portion B8 of the second frame 121. The width of the gap between the fourth side surface portion B4 of the first frame 111 and the eighth side surface portion B8 of the second frame 121 may vary depending on the angle between the first frame 111 and the second frame 121. The hinge housing 13 may be exposed to the outside to a greater extent in the folded state of the foldable electronic device 1 than in the intermediate state of the foldable electronic device 1. In the folded state of the foldable electronic device 1, the hinge housing 13 may be a portion of the exterior that covers the interior of the foldable electronic device 1. In the folded state of the foldable electronic device 1, the side surface of the foldable electronic device 1 may include a first side surface area provided by the first side 1112 of the first frame 111, a second side surface area provided by the second side 1212 of the second frame 121, and a third side surface area provided by the hinge housing 13.

When the foldable electronic device 1 switches from the folded state to the unfolded state, a gap between the first frame 111 and the second frame 121 may be caused on the opposite side of the third display area 153 due to a change in the relative position between the first frame 111 and the second frame 121 connected via the hinge 14 and a change in the state of the hinge 14 coupled with the hinge housing 13. For example, in the unfolded state of the foldable electronic device 1, the gap between the fourth side surface portion B4 of the first frame 111 and the eighth side surface portion B8 of the second frame 121 may be closed, and the hinge housing 13 may not be exposed to the outside.

The second display module 16 (also referred to as a second display) may be located between the second cover 122 and the second support plate 1211 of the second frame 121. The second display module 16 may be disposed on or coupled to the second cover 122 and/or the second support plate 1211. The display area of the second display module 16 may be visually visible through the second cover 122.

In the folded state, the foldable electronic device 1 may be configured to display an image through the second display module 16 instead of the first display module 15.

The first camera module 201, the second camera module 202, the third camera module 203, the fourth camera module 204, and/or the fifth camera module 205 may include one or more lenses, one or more image sensors, and/or an image signal processor (ISP).

The first camera module 201, the second camera module 202, and the third camera module 203 may be accommodated in the first housing 11 to correspond to the first cover 112 (or the first rear surface area of the foldable electronic device 1). For example, the first cover 112 may include a first camera hole (or a first light transmission area) corresponding to the first camera module 201, a second camera hole (or a second light transmission area) corresponding to the second camera module 202, and/or a third camera hole (or a third light transmission area) corresponding to the third camera module 203. The positions or number of camera modules accommodated in the first housing 11 to correspond to the first cover 112 may vary without being limited to the illustrated example.

The first camera module 201 (also referred to as a first camera, a first rear camera module, or a first rear camera), the second camera module 202 (also referred to as a second camera, a second rear camera module, or a second rear camera), or the third camera module 203 (also referred to as a third camera, a third rear camera module, or a third rear camera) may include a wide-angle camera module, a telephoto camera module, a color camera module, a black-and-white camera module, or an IR camera (e.g., a time of flight (TOF) camera or a structured light camera) module.

The first camera module 201, the second camera module 202, and the third camera module 203 may have different properties (e.g., angles of view) or functions.

According to various embodiments, the first camera module 201, the second camera module 202, or the third camera module 203 may provide different angles of view (or lenses with different angles of view). The foldable electronic device 1 may selectively use the angle of view of the first camera module 201, the second camera module 202, or the third camera module 203 based on a user's selection regarding the angle of view.

The fourth camera module 204 may be accommodated in the first housing 11 to correspond to the first front surface area of the foldable electronic device 1.

The fourth camera module 204 (also referred to as a fourth camera, a first front camera module, or a first front camera) may overlap the first display area 151 of the display module 15 when viewed from above the first front surface area of the foldable electronic device 1. The fourth camera module 204 may be located on the rear surface of the first display area 151 or below the first display area 151. When viewed from the outside of the foldable electronic device 1, the fourth camera module 204 or the position of the fourth camera module 204 may not be substantially visually distinguished (or exposed). The fourth camera module 204 may include, for example, a hidden behind-display camera (e.g., an under-display camera (UDC)). External light may pass through the first display module 15 and reach the fourth camera module 204.

Although not separately illustrated, the fourth camera module 204 may be accommodated in the second housing 12 to correspond to the second front surface area of the foldable electronic device 1.

Although not separately illustrated, an additional camera module (not separately illustrated) may be accommodated in the second housing 12 to correspond to the second front surface area of the foldable electronic device 1.

The fifth camera module 205 may be accommodated in the second housing 12 to correspond to the second cover 122 (or the second rear surface area of the foldable electronic device 1).

The fifth camera module 205 may be located in alignment with the opening provided in the second display module 16 or may be at least partially inserted into the opening. External light may pass through the second cover 122 and the opening provided in the second display module 16 and reach the fifth camera module 205. The opening in the second display module 16 aligned with or overlapping the fifth camera module 205 may be a through-hole. In various embodiments, the opening in the second display module 16 aligned with or overlapping the fifth camera module 205 may be as a notch (not separately illustrated).

The fifth camera module 205 (also referred to as a fifth camera, a second front camera module, or a second front camera) may overlap the second display area 16 when viewed from above the second rear surface area of the foldable electronic device 1. The fifth camera module 205 may be located on the rear surface of the second display area 16 or below the second display area 16. When viewed from the outside of the foldable electronic device 1, the fifth camera module 205 or the position of the fifth camera module 205 may not be substantially visually distinguished (or exposed). The fifth camera module 205 may include, for example, a hidden behind-display rear camera (e.g., UDC). External light may pass through the second display module 16 and reach the fifth camera module 205 through the second cover 122.

The first camera module 201, the second camera module 202, the third camera module 203, the fourth camera module 204, or the fifth camera module 205 may operate as at least a portion of a sensor module. For example, an IR camera module may operate as at least portion of a sensor module.

The light-emitting module 206 may be accommodated in the first housing 11 to correspond to the first cover 112 (or the first rear surface area of the foldable electronic device 1). The first cover 112 may include a flash hole (or a fourth light transmission area) corresponding to the light-emitting module 206. The light-emitting module 206 may include, for example, an LED or a xenon lamp. The light-emitting module 206 may include a light source for the first camera module 201, the second camera module 202, and/or the third camera module 203.

The foldable electronic device 1 may further include another light-emitting module (not separately illustrated) accommodated in the foldable housing 10 to correspond to the front surface of the foldable electronic device 1. The light-emitting module may provide, for example, the state information of the electronic device 1 in an optical form. In various embodiments, the light-emitting module may provide a light source that operates in conjunction with the operation of the first camera module 204.

The sensor module 207 may be accommodated in the foldable housing 10 to correspond to the front of the foldable electronic device 1.

The sensor module 207 may include an optical sensor module. The optical sensor module may include, for example, a proximity sensor module or an illuminance sensor module.

The sensor module 207 may overlap the first display area 151 of the first display module 15 when viewed from above the first front surface area of the foldable electronic device 1. The sensor module 207 may be located on the rear surface of the first display area 151 or below the first display area 151. When viewed from the outside of the foldable electronic device 1, the sensor module 207 or the position of the sensor module 207 may not be substantially visually distinguished (or exposed). External light may pass through the first display module 15 and reach the sensor module 207.

The foldable electronic device 1 may further include various other sensor modules (e.g., a biometric sensor modules) (not separately illustrated).

The first audio input module may include a first microphone (also referred to as a first mic) (not separately illustrated). The second audio input module may include a second microphone (also referred to as a second mic) (not separately illustrated). The third audio input module may include a third microphone (also referred to as a third mic) (not separately illustrated). The fourth audio input module may include a fourth microphone (also referred to as a fourth mic) (not separately illustrated). The first microphone may be accommodated in the first housing 11 to correspond to, for example, the first microphone hole H11 included in the first side surface portion B1 of the first side 1112. The second microphone may be accommodated in the first housing 11 to correspond to, for example, the second microphone hole H12 included in the third side surface portion B3 of the first side 1112. The third microphone may be accommodated in the first housing 11 to correspond to, for example, the third microphone hole H13 included in the third side surface portion B3 of the first side 1112. The fourth microphone may be accommodated in the second housing 12 to correspond to, for example, the fourth microphone hole H14 included in the seventh side surface portion B7 of the second side 1212. The positions or numbers of microphones and microphone holes corresponding to the microphones may vary without being limited to the illustrated example.

The first audio output module may include a first speaker (not separately illustrated). The second audio output module may include a second speaker (not separately illustrated). The first speaker or the second speaker may be a speaker for multimedia playback or recording playback. The first speaker may be accommodated in the second housing 12 to correspond to, for example, the first speaker hole H21 included in the second side 1212. The second speaker may be accommodated in the second housing 12 to correspond to, for example, the second speaker hole H21 provided in the second side 1212. The positions or numbers of speakers for multimedia playback or recording playback and speaker holes corresponding to the speakers may vary without being limited to the illustrated example.

The third audio output module may include a third speaker (not separately illustrated). The third speaker may include a call receiver. The third speaker is accommodated in the first housing 11 to correspond to, for example, the third speaker hole H23 provided between the second cover 122 and the seventh side surface portion B7 of the second side 1212. The positions or numbers of speakers for calls and speaker holes corresponding to the speakers may vary without being limited to the illustrated example.

The key input module may include a first key (also referred to as a first side key) 209, a second key (also referred to as a second side key) 210, and/or a key signal generator (not separately illustrated). For example, the first key 209 may be located in a first key hole included in the second side surface portion B2 of the first side 1112, and the second key 210 may be located in a second hey hole included in the second side surface portion B2 of the first side 1112. The key signal generator may be configured to generate a first key signal in response to a press or touch on the first key 209 and a second key signal in response to a press or touch on the second key 210. The positions or number of key input modules may vary without being limited to the illustrated example.

The first connection terminal 211 (also referred to as a first connector or a first interface terminal) may be accommodated in the first housing 11 to correspond to a first connection terminal hole (e.g., a first connector hole) included in the first side surface portion B1 of the first side 1112. The foldable electronic device 1 may transmit and/or receive power and/or data to/from an external electronic device electrically connected to the first connection terminal 211. The first connection terminal 211 may include, for example, a USB connector or an HDMI connector. The positions of the first connection terminal 211 and the first connection terminal hole corresponding to the first connection terminal 211 may vary without being limited to the illustrated example.

The second connection terminal 212 (also referred to as a second connector or a second interface terminal) may be accommodated in the second housing 12 to correspond to a second connection terminal hole (e.g., a second connector hole) included in the sixth side surface portion B6 of the second side 1112. An external storage medium such as a secure digital memory (SD) card, an SIM card, or a universal SIM (USIM) may be connected to the second connection terminal 212. The positions of the second connection terminal 212 and the second connection terminal hole corresponding to the second connection terminal 212 may vary without being limited to the illustrated example.

The first display module 15 may include a flexible display 31 and a support sheet 32.

The flexible display 31 may include a transparent cover 310, a transparent adhesive material for optical purpose (or a transparent bonding material for optical purpose) 320, an optical layer 330, a display panel 340, a base film 350, and/or a lower panel 360.

The transparent cover 310 may protect the flexible display 31 from the outside. The transparent cover 310 may provide (or form) the front surface of the foldable electronic device 1. The transparent cover 310 may be provided in the form of a thin flexible film (e.g., a thin film layer). The transparent cover 310 may include, for example, a plastic film (e.g., a PI film) or thin-film glass (e.g., ultra-thin glass (UTG)). In various embodiments, the transparent cover 310 may include multiple layers. For example, the transparent cover 310 may be in the form in which various coating layers are disposed on a plastic film or thin glass. The transparent cover 310 may be, for example, in the form in which at least one protective layer or coating layer including a polymer material (e.g., PET, PI, or TPU) is disposed on a plastic film or thin film glass.

The optically transparent adhesive material 320 may be disposed between the transparent cover 310 and the optical layer 330. The optical transparent adhesive material 320 may include, for example, an optical clear adhesive (OCA), an optical clear resin (OCR), or a super view resin (SVR).

The optical layer 330 may be disposed between the optically transparent adhesive material 320 and the display panel 340. The optical layer 330 may include a polarizing layer (or a polarizer) or a phase retardation layer (or a phase retarder). The polarizing layer and the phase retardation layer may improve outdoor visibility of a screen. For example, the optical layer 330 may selectively allow light generated from a light source of the display panel 340 and oscillating in a predetermined direction to pass therethrough. In various embodiments, a single layer in which a polarizing layer and a retardation layer are combined may be provided, and such a layer may be interpreted as a "circular polarizing layer".

The polarizing layer (or circular polarizing layer) may be omitted. For example, a black pixel define layer (PDL) and/or a color filter may be provided in place of the polarizing layer.

The display panel 340 may be disposed between the optical layer 330 and the lower panel 350. The display panel 340 may include a light-emitting layer 341, a thin fil transistor (TFT) film (also referred to as a TFT substrate) 342, and/or an encapsulation (e.g., a thin-film encapsulation (TFE)) 343.

The light-emitting layer 341 may be disposed between the TFT film 342 and the encapsulation 343. The light-emitting layer 341 may include multiple pixels implemented by light-emitting elements such as organic light-emitting diodes (OLEDs) or micro-LEDs. The light-emitting layer 341 may be disposed on the TFT film 342 through organic evaporation.

The TFT film 342 may be located between the light-emitting layer 341 and the base film 350. The TFT film 342 may include a film structure in which at least one TFT is disposed on a flexible substrate (e.g., a PI film) through a series of processes such as deposition, patterning, and/or etching. At least one TFT may control a current to a light-emitting element of the light-emitting layer 341 to turn on or off pixels or to adjust brightness of pixels. The at least one TFT may be implemented as, for example, an amorphous silicon (a-Si) TFT, a liquid crystalline polymer (LCP) TFT, a low-temperature polycrystalline oxide (LTPO) TFT, or a low-temperature polycrystalline silicon (LTPS) TFT.

The display panel 340 may include a storage capacitor, and the storage capacitor may maintain a voltage signal to a pixel, may maintain a voltage applied to the pixel within one frame, or may suppress a change in the gate voltage of the TFT due to leakage during a light-emitting time. By a routine for controlling at least one TFT (e.g., initialization or data write), the storage capacitor may maintain the voltage applied to the pixels at regular time intervals.

The encapsulation 343 may be disposed between the optical layer 330 and the light-emitting layer 341. The encapsulation 343 may seal the light-emitting layer 341 to prevent oxygen and/or moisture from penetrating into an OLED, thereby reducing or preventing the OLED from losing a light-emitting property due to oxygen and/or moisture. The encapsulation 343 may also be referred to as a pixel protection layer for protecting multiple pixels of the light-emitting layer 341.

The base film 350 may be disposed between the display panel 340 and the lower panel 460. The base film 350 may include a flexible film made of a polymer or plastic, such as PI or polyethylene terephthalate (PET). The base film 350 may support and/or protect the display panel 340. The base film 350 may be referred to as a protective film, a back film, or a back plate.

Although not separately illustrated, at least one additional polymer layer (e.g., a layer containing PI, PET, or thermoplastic polyurethane (TPU)) may be provided on the rear surface of the display panel 340 in addition to the base film 350.

The lower panel 360 may include multiple layers for various functions. The lower panel 360 may include, for example, a light-blocking layer 361, a buffer layer 362, and/or a lower layer 363. The light-blocking layer 361 may be disposed between the base film 350 and the buffer layer 362. The buffer layer 362 may be disposed between the light-blocking layer 361 and the lower layer 363.

The light-blocking layer 361 may block at least some of light incident from the outside. The light-blocking layer 361 may include, for example, an embossed layer. The embossed layer may be a black layer including an uneven pattern.

The buffer layer 362 may alleviate an external impact applied to the flexible display 31. The buffer layer 362 may include, for example, a sponge layer or a cushion layer.

The lower layer 363 may diffuse, disperse, and/or dissipate heat generated from the foldable electronic device 1 or the flexible display 31.

The lower layer 363 may absorb and/or block electromagnetic waves.

The lower layer 363 may alleviate an external impact applied to the foldable electronic device 1 or the flexible display 31.

The lower layer 363 may include a composite sheet 364 or a metal sheet 365. The composite sheet 364 may be disposed between the buffer layer 362 and the metal sheet 365. The composite sheet 364 may be a sheet obtained by combining layers or sheets having different properties. The composite sheet 364 may include, for example, at least one of polyimide or graphite. The composite sheet 364 may also be replaced with a single sheet containing a single material (e.g., polyimide or graphite). The composite sheet 364 may diffuse, disperse, and/or dissipate heat generated from, for example, the foldable electronic device 1 or the flexible display 31. The metal sheet 365 may be disposed on the rear surface of the flexible display 31. The metal sheet 365 may include, for example, a copper sheet, but may be made of various other metal materials without being limited thereto. The metal sheet 365 may reduce, for example, electromagnetic interference (EMI) related to the flexible display 31.

Although not separately illustrated, at least a portion of the lower layer 363 may include various conductive members. The various conductive members may include plates of various metal materials, such as copper, aluminum, or stainless steel. Various conductive members may reinforce the rigidity of the foldable electronic device 1 or the first display module 15. Various conductive members may block ambient noise. Various conductive members may be used to dissipate heat emitted from heat-emitting components (e.g., a display driver integrated circuit (DDI)).

The lower layer 363 may include a clad metal. The clad metal may be an integrated or single composite material in which multiple metals are laminated (or joined). The clad metal may be manufactured through various methods such as welding, pressing, casting, extruding, or laser cladding of multiple metals. The clad metal may provide (or have) a combination of properties of the multiple metals (e.g., complexation of properties). The multiple metals may have various individual properties, such as electromagnetic properties, chemical properties, thermal properties, or mechanical properties.

The lower layer 363 may include a clad metal in which a first metal layer including stainless steel and a second metal layer including aluminum are laminated. Without being limited thereto, the clad metal may be implemented as a combination of various metal layers.

The lower layer 363 may include various layers for various other functions.

At least one of the plurality of layers included in the lower panel 360 (e.g., the light-blocking layer 361, the buffer layer 362, the composite sheet 364, and the metal sheet 365) may be omitted.

The disposed order of the multiple layers included in the lower panel 360 is not limited to the illustrated embodiment and may be variously changed.

Although not separately illustrated, the multiple layers included in the display panel 340 or the lower panel 360, or the laminated structure or laminated order thereof may vary without being limited to the illustrated example.

The foldable electronic device 1 may include a touch detection circuit (e.g., a touch sensor (not illustrated separately). The touch detection circuit may include a transparent conductive layer (or a film) based on various conductive materials such as indium tin oxide (ITO).

The touch detection circuit (not separately illustrated) may be of an add-on type and may be disposed between the transparent cover 310 and the optical layer 330.

The touch detection circuit (not separately illustrated) may be of an on-cell type and may be disposed between the optical layer 330 and the display panel 340.

The display panel 340 may be of an in-cell type and may include a touch detection circuit or a touch detection function.

The flexible display 31 may include a touch detection circuit (not separately illustrated) disposed on the encapsulation 343 between the encapsulation 343 and the optical layer 330. The touch detection circuit may include, for example, a conductive pattern, such as a metal mesh (e.g., an aluminum metal mesh). To cope with the bending of the flexible display 31, the metal mesh may have greater durability than the transparent conductive layer made of ITO.

The flexible display 31 may further include a pressure detection circuit (also referred to as a pressure sensor) (not separately illustrated) capable of measuring the intensity (pressure) of a touch.

The first display module 15 may include an electromagnetic induction panel (e.g., a digitizer) (not separately illustrated) that detects a magnetic field-type pen input device (e.g., an electronic pen or stylus pen).

The flexible display 31 may be implemented by omitting some of the components or adding other components according to the form of provision thereof or the trend of convergence.

The support sheet 32 (also referred to as a support layer) may be disposed on the rear surface of the flexible display 31. The rear surface of the flexible display 31 may be a surface located on a side opposite to the surface from which light from the display panel 340 including multiple pixels is emitted. The support sheet 32 may be disposed (e.g., attached) on, for example, the rear surface of the lower panel 360 to cover at least a portion of the lower panel 360 of the flexible display 31. The support sheet 32 may be coupled to the lower panel 360 via an adhesive material (or a bonding material) (not separately illustrated).

The flexible display 31 and the support sheet 32 may be bonded to each other via a heat-reactive adhesive material (or heat-reactive bonding material), a light-reactive adhesive material (or a light-reactive bonding material), a general adhesive (or a general bonding agent), or a material such as double-sided tape (not separately illustrated).

The flexible display 31 and the support sheet 32 may be bonded to each other via various polymers such as triazine thiol, dithio pyrimidine, or a silane-based compound, or an organic adhesive material (or an organic bonding material) such as a sealant.

The support sheet 32 may improve the durability of the first display module 15. For example, the support sheet 32 may reinforce the rigidity of the first display module 15. The support sheet 32 may reduce a load or stress effect on the first display module 15 when the foldable electronic device 1 is in the folded state. The support sheet 32 may reduce or prevent damage to the flexible display 31 by a force transmitted when the foldable electronic device 1 switches from the unfolded state to the folded state.

The support sheet 32 may include a metal material. The support sheet 32 may include, for example, stainless steel. The support sheet 32 may include various other metal materials.

The support sheet 32 may include engineering plastic.

The support sheet 32 may include a lattice structure (not separately illustrated) that at least partially overlaps the third display area 153 of the first display module 15. The lattice structure may include, for example, multiple openings (or slits) provided in the support sheet 32. The lattice structure may refer to, for example, a pattern structure in which multiple openings are regularly arranged. For example, the multiple openings may be provided periodically, may have substantially the same shape, and may be repeatedly arranged at regular intervals. The lattice structure may reduce deterioration in flexibility of the third display area 153 of the first display module 15. The lattice structure including the multiple openings may be referred to as an opening pattern, a hole pattern, or a lattice pattern.

The support sheet 32 may include a recess pattern (not separately illustrated) including multiple recesses in place of the lattice structure. For example, the recess pattern may refer to a pattern structure in which multiple recesses provided (or formed) in a grooved shape in one surface of the support sheet 32 facing the lower panel 360 of the flexible display 31 or in the opposite surface to the one surface are arranged regularly.

The lattice structure or the recess pattern may be extended to the first display area 131 and/or the second display area 132 of the first display module 15.

The support sheet 32 including the lattice structure or the recess pattern, or a conductive member corresponding thereto may be configured in multiple layers.

The support sheet 32 may suppress electromagnetic interference (EMI) relative to the flexible display 31.

The support sheet 32 may diffuse or dissipate heat emitted from a heat-emitting component (e.g., a display driving circuit such as a DDI or a DDI chip).

The support sheet 32 may be disposed between the base film 350 and the lower panel 360.

The support sheet 32 may be interpreted as an element separate from the first display module 15.

The support sheet 32 may be omitted.

The second display module 16 may include an optical layer (e.g., the optical layer 330 in FIG. 3), a display panel (e.g., the display panel 340 in FIG. 3), a base film (e.g., the base film 350 in FIG. 3), and/or a lower panel (e.g., the lower panel 360 in FIG. 3). An optically transparent adhesive material (or an optically transparent bonding material) (e.g., the optically transparent adhesive material 320 in FIG. 3) may be disposed between the optical layer and the second cover 122.

The second display module 16 may be implemented to be substantially rigid. For example, the base film (e.g., base film 350 in FIG. 3) included in the second display module 16 may be substantially rigid.

The second display module 16 may be implemented to be substantially flexible.

The second display module 16 may be provided in a form including the second cover 122. The second cover 122 may be excluded from the foldable housing 10.

The foldable electronic device 1 may further include various components depending on its provided form. In various embodiments, specific components may be excluded from the above components or replaced with other components depending on the provided form of the foldable electronic device.

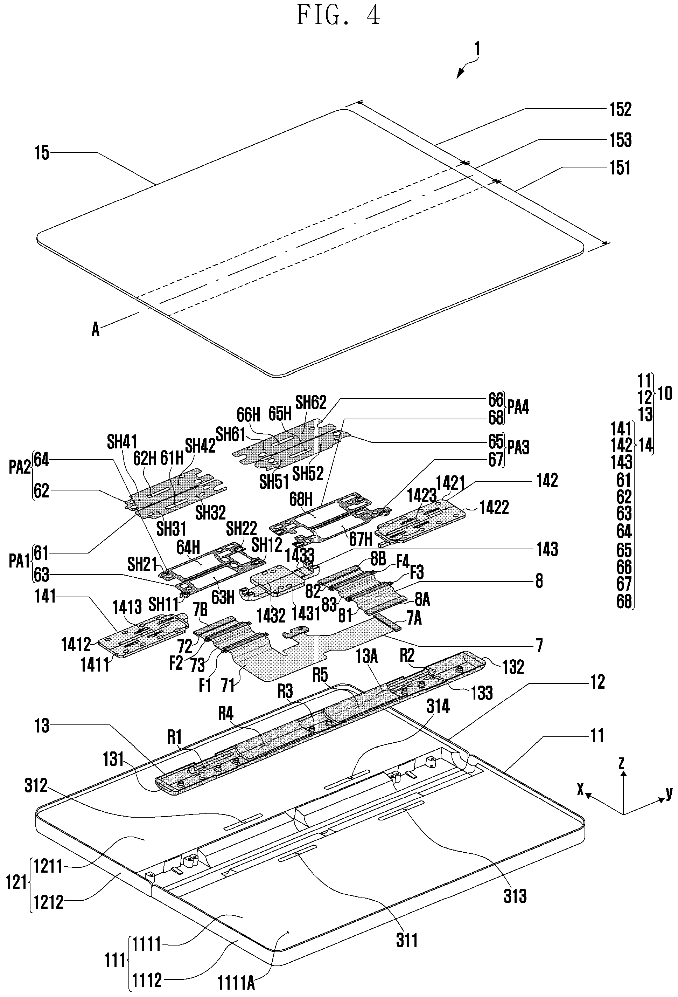

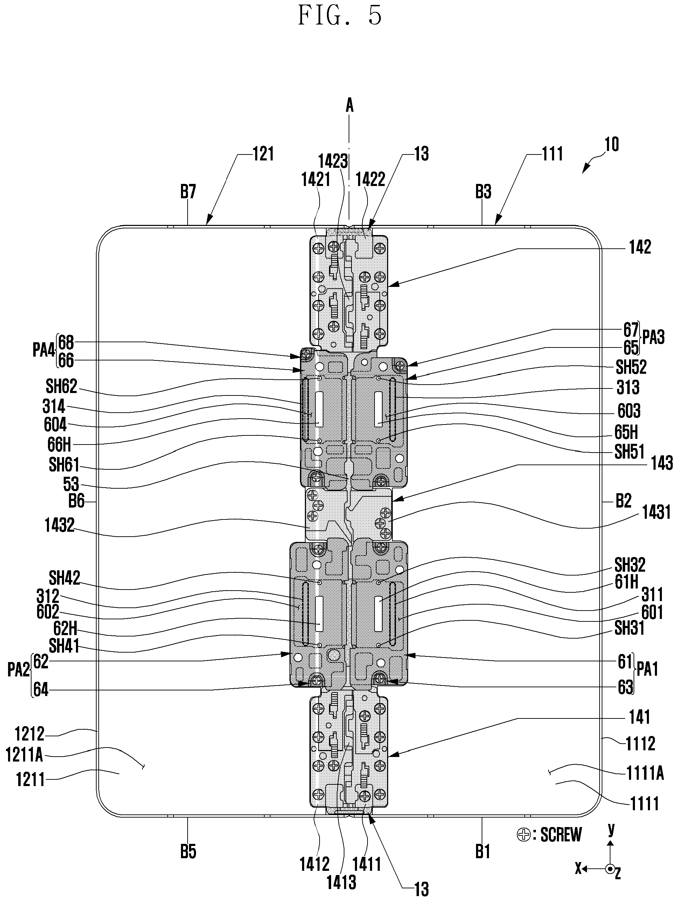

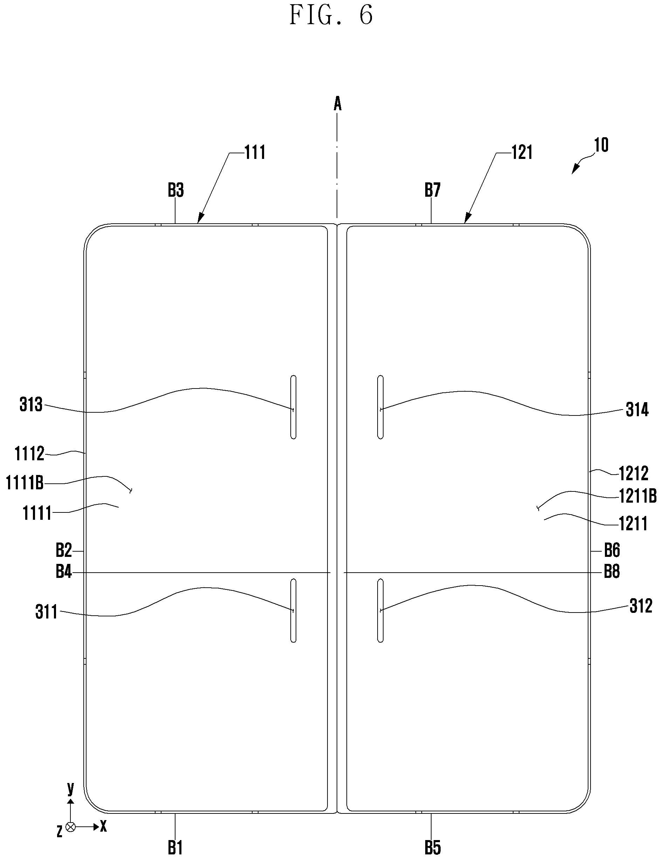

FIG. 4 is an exploded perspective view of a foldable electronic device 1 according to an embodiment of the disclosure. FIGS. 5 and 6 are views illustrating the foldable housing 10 according to an embodiment of the disclosure in the unfolded state.

Referring to FIGS. 4, 5, and 6, the foldable electronic device 1 includes a foldable housing 10, a first display module 15, and a first flexible printed circuit board (FPCB) 7, and/or a second flexible printed circuit board 8. Descriptions of some components that have the same reference numerals as those illustrated in FIGS. 1, 2, and 3 will be omitted.

The foldable housing 10 includes a first housing 11, a second housing 12, a hinge housing 13, and/or a hinge 14.

The first housing 11 may include a first frame 111 and a first cover 112 (see FIG. 1). The first frame 111 may include a first support plate 1111 and a first side 1112.

The first support area 1111A of the first support plate 1111 may include a first surface seating portion on which one or more components, such as the first display area 151 of the first display module 15, are stably placed or supported. The first front surface seating portion may be configured with, for example, a combination of surface areas having different heights.

The third support area 1111B of the first support plate 1111 may include a first rear surface seating portion on which one or more components, such as a first printed circuit board (not separately illustrated) and/or a first battery (not separately illustrated), are stably placed or supported. The first rear surface seating portion may be configured with, for example, a combination of surface areas having different heights.

The second housing 12 may include a second frame 121 and a second cover 122 (see FIG. 1). The second frame 121 may include a second support plate 1211 and a second side 1212.

The second support area 1211A of the second support plate 1211 may include a second surface seating portion on which one or more components, such as the second display area 152 of the first display module 15, are stably placed or supported. The second front surface seating portion may be configured with, for example, a combination of surface areas having different heights.

The fourth support area 1211B of the second support plate 1211 may include a second rear surface seating portion on which one or more components, such as a second printed circuit board (not separately illustrated) and/or a second battery (not separately illustrated), are stably placed or supported. The second rear surface seating portion may be configured with, for example, a combination of surface areas having different heights.

Via an adhesive material (or a bonding material), the first display area 151 of the first display module 15 may be disposed on the first support area 1111A of the first support plate 1111, and the second display area 152 of the first display module 15 may be disposed on the second support area 1211A of the second support plate 1211. The adhesive material (or the bonding material) may include, for example, a heat-reactive adhesive material (or a heat-reactive bonding material), a light-reactive adhesive material (or a light-reactive bonding material), a general adhesive (or a general bonding agent), and/or double-sided tape.

The hinge housing 13 may include a first side wall 131 and a second side wall 132. The hinge housing 13 may extend from the first side wall 131 to the second side wall 132 in the direction of the center line A of the foldable electronic device 1.

The first side wall 131 and the second side wall 132 of the hinge housing 13 may be substantially perpendicular to the direction of the center line A of the foldable electronic device 1, and may be spaced apart from each other in the direction of the center line A of the foldable electronic device 1.

The first side wall 131 and the second side wall 132 of the hinge housing 13 may be provided (or formed) to be convex in opposite directions.

The first side wall 131 and the second side wall 132 of the hinge housing 13 may be provided (or formed) on opposite sides to be substantially symmetrical to each other.

The first side wall 131 of the hinge housing 13 may be located to correspond to the first side surface portion B1 of the first frame 111 and the fifth side surface portion B5 of the second frame 121. In the unfolded state of the foldable electronic device 1, the first side wall 131 may be covered by the first side surface portion B1 of the first frame 111 and the fifth side surface portion B5 of the second frame 121. In the folded state of the foldable electronic device 1, the first side wall 131 may be exposed to the outside through an open gap between the first side surface portion B1 of the first frame 111 and the fifth side surface portion B5 of the second frame 121.

The second side wall 132 of the hinge housing 13 may be located to correspond to the third side surface portion B3 of the first frame 111 and the seventh side surface portion B7 of the second frame 121. In the unfolded state of the foldable electronic device 1, the second side wall 132 may be covered by the third side surface portion B3 of the first frame 111 and the seventh side surface portion B7 of the second frame 121. In the folded state of the foldable electronic device 1, the second side wall 132 may be exposed to the outside through an open gap between the third side surface portion B3 of the first frame 111 and the seventh side surface portion B7 of the second frame 121.

The portion between the first and second side walls 131 and 132 of the hinge housing 13 (hereinafter, referred to as a "side wall extension 133") may extend or interconnect the first side wall 131 and the second side wall 132. In the folded state of the foldable electronic device 1, the side wall extension 133 may be exposed to the outside through an open gap between the fourth side surface portion B4 of the first frame 111 and the eighth side surface portion B8 of the second frame 121. In the unfolded state of the foldable electronic device 1, the gap between the fourth side surface portion B4 of the first frame 111 and the eighth side surface portion B8 of the second frame 121 may be closed, and the side wall extension 133 may not be exposed to the outside.

The hinge housing 13 may include a first surface area (not separately illustrated) and a second surface area 13A provided through a combination of the first side wall 131, the second side wall 132, and the side wall extension 1333. The first surface area may include an area exposed to the outside when the foldable electronic device 1 is in the folded state. The second surface area 13A may be arranged on the opposite side from the first surface area. The second surface area 13A may include a seating portion configured such that the first hinge module 141, the second hinge module 142, and the third hinge module 143 are stably placed and supported thereon. The seating portion may be provided by a combination of surface areas having different heights. For example, the seating portion may include a first recess R1 corresponding to the first hinge module 141, a second recess R3 corresponding to the second hinge module 142, and a third recess R3 corresponding to a third hinge module 143.

The hinge housing 13 may be coupled to the hinge 14. The hinge housing 13 may be connected to the first frame 111 of the first housing 11 and the second frame 121 of the second housing 12 via, for example, the hinge 14. When the foldable electronic device 1 switches between the unfolded state and the folded state, the first housing 11 and the second housing 12 connected to each other via the hinge 14 may rotate in different directions about the hinge 14 when viewed in the direction of the center line A of the foldable electronic device 1. In the unfolded state of the foldable electronic device 1, the hinge housing 13 may be covered by the first frame 111 of the first housing 11 and the second frame 121 of the second housing 12. In the folded state of the foldable electronic device 1, the hinge housing 13 may be exposed to the outside through a gap between the first frame 111 of the first housing 11 and the second frame 121 of the second housing 12.

The hinge housing 13 may be defined or interpreted as a component included in the hinge 14.

The hinge 14 may include a first hinge module (also referred to as a first hinge assembly) 141, a second hinge module (also referred to as a second hinge assembly) 142, a third hinge module (also referred to as a third hinge assembly) 143, a first plate 61, a second plate 62, a third plate 63, a fourth plate 64, a fifth plate 65, a sixth plate 66, a seventh plate 67, and/or an eighth plate 68.

The first hinge module 141, the second hinge module 142, and the third hinge module 143 may interconnect the first frame 111 and the second frame 121. The first frame 111 and the second frame 121 may be rotatably connected to each other via the first hinge module 141, the second hinge module 142, and the third hinge module 143.

The first hinge module 141, the second hinge module 142, and the third hinge module 143 may be arranged along the center line A of the foldable electronic device 1, and the third hinge module 143 may be located between the first hinge module 141 and the second hinge module 142.

The third hinge module 143 may be located to correspond to the center between the first hinge module 141 and the second hinge module 141 (e.g., a point on the center line (A) that is substantially equidistant from the first hinge module 141 and the second hinge module 142).

The first hinge module 141 may include a first bracket 1411, a second bracket 1412, and/or a bracket connector 1413. The first bracket 1411 may be disposed on or coupled to the first support area 1111A of the first frame 111 through, for example, screw fastening. The second bracket 1412 may be disposed on or coupled to the second support area 1211A of the second frame 121 through, for example, screw fastening. The first bracket connector 1413 may interconnect the first bracket 1411 and the second bracket 1412. The first bracket 1411 and the second bracket 1412 may be rotatable relative to the first bracket connector 1413.

The first bracket connector 1413 of the first hinge module 141 may be configured to allow the first frame 111, to which the first bracket 1411 of the first hinge module 141 is fixed, and the second frame 121, to which the second bracket 1412 of the first hinge module 141 is fixed, to be rotated by the same angle in opposite directions.

The first bracket connector 1413 of the first hinge module 141 may be configured to allow the first frame 111, to which the first bracket 1411 of the first hinge module 141 is fixed, and the second frame 121, to which the second bracket 1412 of the first hinge module 141 is fixed, to be rotated by at least one angle and to be maintained at the at least one angle. The first bracket connector 1413 may have, for example, a free-stop function.

The first bracket connector 1413 of the first hinge module 141 may be configured to provide a force by which the first frame 111, to which the first bracket 1411 of the first hinge module 141 is fixed, and the second frame 121, to which the second bracket 1412 of the first hinge module 141 is fixed, can be rotated relative to each other. Although not separately illustrated, the first bracket connector 1413 may be configured with a combination of, for example, at least one shaft, at least one cam gear, and/or at least one compression spring providing elasticity.

The first bracket connector 1413 of the first hinge module 141 may be coupled to the hinge housing 13. The first bracket connector 1413 may be coupled to the hinge housing 13 through, for example, screw fastening.

The first bracket connector 1413 of the first hinge module 141 may be coupled to the hinge housing 13. The first bracket connector 1413 may be disposed in or coupled to the first recess R1 of the hinge housing 13 through, for example, screw fastening.

The second hinge module 142 may be provided to be at least partially the same as, substantially the same as, or at least partially similar to the first hinge module 141. The second hinge module 142 may include a third bracket 1421 (e.g., the first bracket 1411), a fourth bracket 1422 (e.g., the second bracket 1412), and/or a second bracket connector 1423 (e.g., the first bracket connector 1413). In an embodiment, the second hinge module 142 may be disposed in the foldable electronic device 1 in an arrangement direction opposite to that of the first hinge module 141. The third bracket 1421 of the second hinge module 142 may be disposed on or coupled to the second support area 1211A of the second frame 121, and the fourth bracket 1422 of the second hinge module 142 may be disposed on or coupled to the first support area 1111A of the first frame 111.

The second bracket connector 1423 of the second hinge module 142 may be coupled to the hinge housing 13. The second bracket connector 1423 may be disposed in or coupled to the second recess R2 of the hinge housing 13 through, for example, screw fastening.

The third hinge module 143 may include a guide rail assembly. The third hinge module 143 may include, for example, a first slider 1431, a second slider 1432, and a guide rail 1433. The first slider 1431 may be disposed on or coupled to the first support area 1111A of the first frame 111 through, for example, screw fastening. The second slider 1432 may be disposed on or coupled to the second support area 1211A of the second frame 121 through, for example, screw fastening. The first slider 1431 may be connected to the guide rail 1433 to be slidable with respect to the guide rail 1433. The second slider 1432 may be connected to the guide rail 1433 to be slidable with respect to the guide rail 1433. The guide rail 1433 may include a first guide rail (e.g., a first rotational motion guide rail) having a sliding pair relationship with the first slider 1431, and a second guide rail (e.g., a second rotational motion guide rail) having a sliding pair relationship with the second slider 1432.

The guide rail 1433 of the third hinge module 143 may be coupled to the hinge housing 13. The guide rail 1433 may be disposed in or coupled to the third recess R3 of the hinge housing 13 through, for example, screw fastening.

The third hinge module 143 between the first hinge module 141 and the second hinge module 142 may reduce a phenomenon in which the gap between the first frame 111 and the second frame 121 opens.

Although not separately illustrated, the first hinge module 141, the second hinge module 142, and/or the third hinge module 143 may be provided in various other forms without being limited to the illustrated example.

The hinge 14 may include a first plate assembly PA1 including a combination of the first plate 61 and the third plate 63. The first plate assembly PA1 may be defined or interpreted as a plate-shaped support in which the first plate 61 and the third plate 63 overlap and are coupled to each other.

The first plate assembly PA1 may be disposed on or coupled to the first support plate 1111 of the first frame 111. The first plate assembly PA1 may be disposed on or coupled to the first support area 1111A of the first support plate 1111 through, for example, screw fastening.

The first plate 61 and/or the third plate 63 may include a metal material.

The first plate 61 and/or the third plate 63 may include stainless steel, titanium, an amorphous alloy, or a metal-ceramic composite material (e.g., cermet).

The first plate 61 and/or the third plate 63 may include magnesium, a magnesium alloy, aluminum, an aluminum alloy, zinc alloy, or a copper alloy. The first plate 61 and/or the third plate 63 may include various other metal materials.

The first plate 61 and the third plate 63 may include the same metal material.

The first plate 61 and the third plate 63 may include different metal materials.

The first plate 61 and the third plate 63 may have substantially different thicknesses. For example, the third plate 63 may have a greater thickness than the first plate 61.

The first plate 61 and the third plate 63 may have substantially the same thickness.

The third plate 63 may be configured to have a greater influence on securing the rigidity of the first plate assembly PA1 than the first plate 61.

The first plate 61 and the third plate 63 may be coupled through welding.

The first plate 61 and the third plate 63 may be coupled via an adhesive material (or a bonding material) (not separately illustrated).

The first plate 61 and the third plate 63 may be coupled through various other methods (not separately illustrated).

The first plate 61 and/or the third plate 63 may include a polymer such as engineering plastic.

The third plate 63 may be at least partially located between the first plate 61 and the first support plate 1111 of the first frame 111.

The third plate 63 may include multiple screw holes SH11 and SH12 corresponding to screw fastening to the first support plate 1111 of the first frame 111.

A portion of the third plate 63 including a screw hole SH11 or SH12 (also referred to as a screw hole area) may not overlap the first plate 61. For example, the first plate 61 may include an opening (e.g., a notch-shaped opening in the illustrated example) aligned to correspond to the portion of the third plate 63 including the screw hole. The multiple screw holes SH11 and SH12 in the third plate 63 may be provided at positions where the first plate assembly PA1 and the first support plate 1111 of the first frame 111 can be stably and firmly coupled through screw fastening.

Although not separately illustrated, the first plate 61 may include a first screw hole, and the third plate 63 may include a second screw hole aligned with the first screw hole. The first plate 61 and the third plate 63 may be coupled to the first support plate 1111 of the first frame 111 through screw fastening in which the first screw hole and the second screw hole correspond to each other.

The first plate assembly PA1 may be at least partially disposed between the first hinge module 141 and the third hinge module 143.

One side area of the first plate assembly PA1 corresponding to the first hinge module 141 may be supported by the first hinge module 141. A portion of the first hinge module 141 (e.g., a portion of the first bracket 1411) may be located between the one side area of the first plate assembly PA1 and the first support plate 1111 of the first frame 111 and may support the one side area of the first plate assembly PA1.

The other side area of the first plate assembly PA1 corresponding to the third hinge module 143 may be supported by the third hinge module 143. A portion of the third hinge module 143 (e.g., a portion of the first slider 1431) may be located between the other side area of the first plate assembly PA1 and the first support plate 1111 of the first frame 111 and may support the other side area of the first plate assembly PA1.

Although not separately illustrated, the first plate assembly PA1 may be connected to the first hinge module 141 or the third hinge module 143 through screw fastening. For example, the one side area of the first plate assembly PA1 that overlaps the first hinge module 141 and is supported by the first hinge module 141 may be coupled to the first hinge module 141 through screw fastening. For example, the other side area of the first plate assembly PA1 that overlaps the third hinge module 143 and is supported by the third hinge module 143 may be coupled to the third hinge module 143 through screw fastening.

Instead of screw fastening between the first plate assembly PA1 and the first support plate 1111 of the first frame 111, the first plate assembly PA1 may be operatively connected to the first hinge module 141 and the third hinge module 143. When the foldable electronic device 1 switches between the unfolded state and the folded state, the first plate assembly PA1 may move in response to the movement of the first hinge module 141 and the third hinge module 143.

The hinge 14 may include a third plate assembly PA3 including a combination of the fifth plate 65 and the seventh plate 67. The third plate assembly PA3 may be defined or interpreted as a plate-shaped support in which the fifth plate 65 and the seventh plate 67 overlap and are coupled to each other.

The third plate assembly PA3 may be disposed on or coupled to the first support plate 1111 of the first frame 111. The third plate assembly PA3 may be disposed on or coupled to the first support area 1111A of the first support plate 1111 through, for example, screw fastening. The third plate assembly PA3 may be implemented to be at least partially the same as, substantially the same as, or at least partially similar to the first plate assembly PA1.

The third plate assembly PA3 may be spaced apart from the first plate assembly PA1 in the direction of the center line A of the foldable electronic device 1.

The third plate assembly PA3 may be at least partially disposed between the second hinge module 142 and the third hinge module 143.

One side area of the third plate assembly PA3 corresponding to the second hinge module 142 may be supported by the second hinge module 142. A portion of the second hinge module 142 (e.g., a portion of the fourth bracket 1422) may be located between the one side area of the third plate assembly PA3 and the first support plate 1111 of the first frame 111 and may support the one side area of the third plate assembly PA3.

The other side area of the third plate assembly PA3 corresponding to the third hinge module 143 may be supported by the third hinge module 143. A portion of the third hinge module 143 (e.g., a portion of the first slider 1431) may be located between the other side area of the third plate assembly PA3 and the first support plate 1111 of the first frame 111 and may support the other side area of the third plate assembly PA3.

The third plate assembly PA3 may be connected to the second hinge module 142 or the third hinge module 143 through screw fastening. For example, the one side area of the third plate assembly PA3 that overlaps the second hinge module 142 and is supported by the second hinge module 142 may be coupled to the second hinge module 142 through screw fastening. For example, the other side area of the third plate assembly PA3 that overlaps the third hinge module 143 and is supported by the third hinge module 143 may be coupled to the third hinge module 143 through screw fastening.

Instead of screw fastening between the third plate assembly PA3 and the first support plate 1111 of the first frame 111, the third plate assembly PA3 may be operatively connected to the second hinge module 142 and the third hinge module 143. When the foldable electronic device 1 switches between the unfolded state and the folded state, the third plate assembly PA3 may move in response to the movement of the second hinge module 142 and the third hinge module 143.

The hinge 14 may include a second plate assembly PA2 including a combination of the second plate 62 and the fourth plate 64. The second plate assembly PA2 may be defined or interpreted as a plate-shaped support in which the second plate 62 and the fourth plate 64 overlap and are coupled to each other.

The second plate assembly PA2 may be disposed on or coupled to the second support plate 1211 of the second frame 121. The second plate assembly PA2 may be disposed on or coupled to the second support area 1211A of the second support plate 1211 through, for example, screw fastening.

The second plate 62 and/or the fourth plate 64 may include a metal material.

The second plate 62 and/or the fourth plate 64 may include stainless steel, titanium, an amorphous alloy, or a metal-ceramic composite material (e.g., cermet).

The second plate 62 and/or the fourth plate 64 may include magnesium, a magnesium alloy, aluminum, an aluminum alloy, zinc alloy, or a copper alloy. The second plate 62 and/or the fourth plate 64 may include various other metal materials.

The second plate 62 and the fourth plate 64 may include the same metal material.

The second plate 62 and the fourth plate 64 may include different metal materials.

The second plate 62 may include the same metal material as the first plate 61.

The fourth plate 64 may include the same metal material as the third plate 63.

The second plate 62 and the fourth plate 64 may have substantially different thicknesses. For example, the fourth plate 64 may have a greater thickness than the second plate 62.

The second plate 62 and the fourth plate 64 may have substantially the same thickness.

The fourth plate 64 may be configured to have a greater influence on securing the rigidity of the second plate assembly PA2 than the second plate 62.

The second plate 62 may be provided in substantially the same thickness as the first plate 61.

The fourth plate 64 may be provided in substantially the same thickness as the third plate 63.

The second plate 62 and the fourth plate 64 may be coupled through welding.

The second plate 62 and the fourth plate 64 may be coupled via an adhesive material (or a bonding material) (not separately illustrated).

The second plate 62 and the fourth plate 64 may be coupled through various other methods (not separately illustrated).

The second plate 62 and/or the fourth plate 64 may include a polymer such as engineering plastic.

The fourth plate 64 may be at least partially located between the second plate 62 and the second support plate 1211 of the second frame 121.

The fourth plate 64 may include multiple screw holes SH21 and SH22 corresponding to screw fastening to the second support plate 1211 of the second frame 121.

A portion of the fourth plate 64 including a screw hole SH21 or SH22 (also referred to as a screw hole area) may not overlap the second plate 62. For example, the second plate 62 may include an opening (e.g., a notch-shaped opening in the illustrated example) aligned to correspond to the portion of the fourth plate 64 including the screw hole. The multiple screw holes SH21 and SH22 in the fourth plate 64 may be provided at positions where the second plate assembly PA2 and the second support plate 1211 of the second frame 121 can be stably and firmly connected through screw fastening.

Although not separately illustrated, the second plate 62 may include a third screw hole, and the fourth plate 64 may include a fourth screw hole aligned with the third screw hole. The second plate 62 and the fourth plate 64 may be coupled to the second support plate 1211 of the second frame 121 through screw fastening in which the third screw hole and the fourth screw hole correspond to each other.

The second plate assembly PA2 may be at least partially disposed between the first hinge module 141 and the third hinge module 143.

One side area of the second plate assembly PA2 corresponding to the first hinge module 141 may be supported by the first hinge module 141. A portion of the first hinge module 141 (e.g., a portion of the second bracket 1412) may be located between the one side area of the second plate assembly PA2 and the second support plate 1211 of the second frame 121 and may support the one side area of the second plate assembly PA2.

The other side area of the second plate assembly PA2 corresponding to the third hinge module 143 may be supported by the third hinge module 143. A portion of the third hinge module 143 (e.g., a portion of the second slider 1432) may be located between the other side area of the second plate assembly PA2 and the second support plate 1211 of the second frame 121 and may support the other side area of the second plate assembly PA2.

Although not separately illustrated, the second plate assembly PA2 may be connected to the first hinge module 141 or the third hinge module 143 through screw fastening. For example, the one side area of the second plate assembly PA2 that overlaps the first hinge module 141 and is supported by the first hinge module 141 may be coupled to the first hinge module 141 through screw fastening. For example, the one side area of the second plate assembly PA2 that overlaps the third hinge module 143 and is supported by the third hinge module 143 may be coupled to the third hinge module 143 through screw fastening.

Instead of screw fastening between the second plate assembly PA2 and the second support plate 1211 of the second frame 121, the second plate assembly PA2 may be operatively connected to the first hinge module 141 and the third hinge module 143. When the foldable electronic device 1 switches between the unfolded state and the folded state, the second plate assembly PA2 may move in response to the movement of the first hinge module 141 and the third hinge module 143.

The hinge 14 may include a fourth plate assembly PA4 including a combination of the sixth plate 66 and the eighth plate 68. The fourth plate assembly PA4 may be defined or interpreted as a plate-shaped support in which the sixth plate 66 and the eighth plate 68 overlap and are coupled to each other.

The fourth plate assembly PA4 may be disposed on or coupled to the second support plate 1211 of the second frame 121. The fourth plate assembly PA4 may be disposed on or coupled to the second support area 1211A of the second support plate 1211 through, for example, screw fastening.

The fourth plate assembly PA4 may be implemented to be at least partially the same as, substantially the same as, or at least partially similar to the second plate assembly PA2.

The fourth plate assembly PA4 may be spaced apart from the second plate assembly PA2 in the direction of the center line A of the foldable electronic device 1.

The fourth plate assembly PA4 may be at least partially disposed between the second hinge module 142 and the third hinge module 143.

One side area of the fourth plate assembly PA4 corresponding to the second hinge module 142 may be supported by the second hinge module 142. A portion of the second hinge module 142 (e.g., a portion of the third bracket 1421) may be located between the one side area of the fourth plate assembly PA4 and the second support plate 1211 of the second frame 121 and may support the one side area of the fourth plate assembly PA4.

The other side area of the fourth plate assembly PA4 corresponding to the third hinge module 143 may be supported by the third hinge module 143. A portion of the third hinge module 143 (e.g., a portion of the second slider 1432) may be located between the other side area of the fourth plate assembly PA4 and the second support plate 1211 of the second frame 121 and may support the other side area of the fourth plate assembly PA4.

Although not separately illustrated, the fourth plate assembly PA4 may be connected to the second hinge module 142 or the third hinge module 143 through screw fastening. For example, the one side area of the fourth plate assembly PA4 that overlaps the second hinge module 142 and is supported by the second hinge module 142 may be coupled to the second hinge module 142 through screw fastening. For example, the other side area of the fourth plate assembly PA4 that overlaps the third hinge module 143 and is supported by the third hinge module 143 may be coupled to the third hinge module 143 through screw fastening.

Instead of screw fastening between the fourth plate assembly PA4 and the second support plate 1211 of the second frame 121, the fourth plate assembly PA4 may be operatively connected to the second hinge module 142 and the third hinge module 143. When the foldable electronic device 1 switches between the unfolded state and the folded state, the fourth plate assembly PA4 may move in response to the movement of the second hinge module 142 and the third hinge module 143.

In the unfolded state of the foldable electronic device 1, the first hinge module 141, the second hinge module 142, the third hinge module 143, the first plate assembly PA1, and the third plate assembly PA3 may support one side area of the third display area 153 of the first display module 15 with reference to the center line A of the foldable electronic device 1. The first plate assembly PA1 may support a portion of the third display area 153 of the first display module 15 corresponding to the space between the first hinge module 141 and the third hinge module 143. The third plate assembly PA3 may support a portion of the third display area 153 of the first display module 15 corresponding to a space between the second hinge module 142 and the third hinge module 143.

In the unfolded state of the foldable electronic device 1, the first hinge module 141, the second hinge module 142, the third hinge module 143, the second plate assembly PA2, and the fourth plate assembly PA4 may support the other side area of the third display area 153 of the first display module 15 with reference to the center line A of the foldable electronic device 1. The second plate assembly PA2 may support a portion of the third display area 153 of the first display module 15 corresponding to the space between the first hinge module 141 and the third hinge module 154. The fourth plate assembly PA4 may support a portion of the third display area 153 of the first display module 15 corresponding to a space between the second hinge module 142 and the third hinge module 143.

In the unfolded state of the foldable electronic device 1, even when an external force (e.g., an external pressure such as a touch input using a user's finger or a touch input using an electronic pen) is applied to the third display area 153 of the first display module 15, the third display area 153 is capable of being maintained substantially flat by being supported by the first hinge module 141, the second hinge module 142, the third hinge module 143, the first plate assembly PA1, the second plate assembly PA2, the third plate assembly PA3, and the fourth plate assembly PA4. In the unfolded state of the foldable electronic device 1, the first hinge module 141, the second hinge module 142, the third hinge module 143, the first plate assembly PA1, the second plate assembly PA2, the third plate assembly PA3, and the fourth plate assembly PA4 is capable of reducing or preventing sagging or creasing of the third display area 153.

The first plate assembly PA1 may include a first surface 601 that supports the third display area 153 of the first display module 15 in the unfolded state of the foldable electronic device 1. The first surface 601 may be provided by, for example, a first plate 61. The first surface 601 may include a flat surface capable of supporting the third display area 153 in the unfolded state of the foldable electronic device 1.

The second plate assembly PA2 may include a second surface 602 that supports the third display area 153 of the first display module 15 in the unfolded state of the foldable electronic device 1. The second surface 602 may be provided by, for example, the second plate 62. The first surface 602 may include a flat surface capable of supporting the third display area 153 in the unfolded state of the foldable electronic device 1.

The first surface 601 of the first plate assembly PA1 and the second surface 602 of the second plate assembly PA2 may face each other in the folded state of the foldable electronic device 1.

The first surface 601 of the first plate assembly PA1 and the second surface 602 of the second plate assembly PA2 may substantially form an angle of about 180 degrees therebetween in the unfolded state of the foldable electronic device 1.

The third plate assembly PA3 may include a third surface 603 that supports the third display area 153 of the first display module 15 in the unfolded state of the foldable electronic device 1. The third surface 603 may be provided by, for example, the fifth plate 65. The third surface 603 may include a flat surface capable of supporting the third display area 153 in the unfolded state of the foldable electronic device 1.

The first surface 601 of the first plate assembly PA1 and the third surface 603 of the third plate assembly PA3 may be provided such that there is no substantial height difference.

The fourth plate assembly PA4 may include a fourth surface 604 that supports the third display area 153 of the first display module 15 in the unfolded state of the foldable electronic device 1. The fourth surface 604 may be provided by, for example, the sixth plate 66. The fourth surface 604 may include a flat surface capable of supporting the third display area 153 in the unfolded state of the foldable electronic device 1.

The second surface 602 of the second plate assembly PA2 and the fourth surface 604 of the fourth plate assembly PA4 may be provided such that there is no substantial height difference.

The third surface 603 of the third plate assembly PA3 and the fourth surface 604 of the fourth plate assembly PA4 may face each other in the folded state of the foldable electronic device 1.

In the unfolded or folded state of the foldable electronic device 1, the angle formed by the first surface 601 of the first plate assembly PA1 and the second surface 602 of the second plate assembly PA2 may be substantially the same as the angle formed by the third surface 603 of the third plate assembly PA3 and the fourth surface 604 of the fourth plate assembly PA4.

In the unfolded state of the foldable electronic device 1, the first surface 601 of the first plate assembly PA1, the second surface 602 of the second plate assembly PA2, the third surface 603 of the three plate assembly PA3, and the fourth surface 604 of the fourth plate assembly PA4 may be provided without a substantial height difference with respect to the surface of the first hinge module 141 that supports the third display area 153 of the first display module 15, the surface of the second hinge module 142 that supports the third display area 153, and the surface of the third hinge module 143 that supports the third display area 153.

The hinge 14 may be configured to provide a space in which the third display area 153 of the first display module 15 can be disposed in a bent shape capable of reducing bending stress when the foldable electronic device 1 switches from the unfolded state to the folded state. The hinge 14 may be configured to provide a space in which the third display area 153 can be disposed in a bent shape capable of suppressing a buckling phenomenon when the foldable electronic device 1 switches from the unfolded state to the folded state. For example, when the foldable electronic device 1 switches from the unfolded state to the folded state, the third display area 153 may be disposed in a droplet shape or a dumbbell shape capable of reducing breakage or permanent deformation.

The first flexible printed circuit board 7 may extend from a first connector 7A to a second connector 7B. The first connector 7A may be electrically connected to a first electrical element (e.g., the first printed circuit board) (not separately illustrated) disposed on the first frame 111. The second connector 7B may be electrically connected to a second electrical element (e.g., the second printed circuit board) (not separately illustrated) disposed on the second frame 121.

The second flexible printed circuit board 8 may extend from a third connector 8A to a fourth connector 8B. The third connector 8A may be electrically connected to the first electrical element (e.g., the first printed circuit board) (not separately illustrated) disposed on the first frame 111. The fourth connector 8B may be electrically connected to the second electrical element (e.g., the second printed circuit board) (not separately illustrated) disposed on the second frame 121.

The first flexible printed circuit board 7 and the second flexible printed circuit board 8 are disposed across the hinge 14.

The first support plate 1111 of the first frame 111 may include a first opening (or a first through-hole) 311. The first opening 311 may be perforated between the first support area 1111A and the third support area 1111B of the first support plate 1111. The second support plate 1211 of the second frame 121 may include a second opening (or a second through-hole) 312. The second opening 312 may be perforated between the second support area 1211A and the fourth support area 1211B of the second support plate 1211. The first flexible printed circuit board 7 may penetrate the first opening 311 and the second opening 312.

The first opening 311 and the second opening 312 may overlap and align with each other in the folded state of the foldable electronic device 1.

The first support plate 1111 of the first frame 111 may include a third opening (or a third through-hole) 313. The third opening 313 may be perforated between the first support area 1111A and the third support area 1111B of the first support plate 1111. The second support plate 1211 of the second frame 121 may include a fourth opening (or a fourth through-hole) 314. The fourth opening 314 may be perforated between the second support area 1211A and the fourth support area 1211B of the second support plate 1211. The second flexible printed circuit board 8 may penetrate the third opening 313 and the fourth opening 314.

The third opening 313 and the fourth opening 314 may overlap and align with each other in the folded state of the foldable electronic device 1.

The first opening 311 and the third opening 313 may be spaced apart from and substantially align with each other in the direction of the center line A of the foldable electronic device 1 (e.g., the y-axis direction).

The second opening 312 and the fourth opening 314 may be spaced apart from and substantially align with each other in the direction of the center line A of the foldable electronic device 1.

The first flexible printed circuit board 7 may include a first area 71, a second area 72, and/or a third area 73 disposed between the first area 71 and the second area 72. The third area 73 may extend the first area 71 and the second area 72. The first area 71 may extend from the third area 73 to the first connector 7A. The second area 72 may extend from the third area 73 to the second connector 7B. The first area 71, the second area 72, and the third area 73 may be substantially flexible.

The first area 71 of the first flexible printed circuit board 7 may penetrate the first opening 311 in the first frame 111. The second area 72 of the first flexible printed circuit board 7 may penetrate the second opening 312 in the second frame 121.

The first flexible printed circuit board 7 may include a first fixing portion F1 and a second fixing portion F2. The first fixing portion F1 may be provided (or formed) between the first area 71 and the third area 73 or at a boundary between the first area 71 and the third area 73. The second fixing portion F2 may be provided (or formed) between the second area 72 and the third area 73 or at a boundary between the second area 72 and the third area 73. The third area F3 may actually refer to a portion extending the first fixing portion F1 and the second fixing portion F2 of the first flexible printed circuit board 7 between the first fixing portion F1 and the second fixing portion F2.

The first fixing portion F1 and/or the second fixing portion F2 of the first flexible printed circuit board 7 may be configured to be less flexible than other portions of the first flexible printed circuit board 7. The first fixing portion F1 and/or the second fixing portion F2 may be substantially rigid. The first fixing portion F1 may be rigid by including, for example, a first reinforcing portion (or a first reinforcing member or a first reinforcing structure) such as a stiffener. The second fixing portion F2 may be rigid by including, for example, a second reinforcing portion (or a second reinforcing member or a second reinforcing structure) such as a stiffener. The first fixing portion F1 may be referred to as a first rigid portion, and the second fixing portion F2 may be referred to as a second rigid portion.

The first fixing portion F1 and/or the second fixing portion F2 of the first flexible printed circuit board 7 may be implemented to be substantially rigid and flat. The first fixing portion F1 and/or the second fixing portion F2 may be substantially rigid and flat by including, for example, a reinforcing plate (or a reinforcing film or a reinforcing layer) (e.g., a stiffener). The reinforcing plate may include, for example, FR4 (e.g., glass-reinforced epoxy laminate material) or polyimide (PI).

The first fixing portion F1 and/or the second fixing portion F2 of the first flexible printed circuit board 7 may be configured to have a thickness greater than those of other portions of the first flexible printed circuit board 7. In an embodiment, the first fixing portion F1 and/or the second fixing portion F2 may have more laminated layers than those in other portions of the first flexible printed circuit board 7. This may allow the first fixing portion F1 and/or the second fixing portion F2 to be configured to be less flexible than other portions of the first flexible printed circuit board 7.

The first flexible printed circuit board 7 may be implemented as a rigid-FPCB (RFPCB), and the first fixing portion F1 and/or the second fixing portion F2 may be substantially rigid without a separate reinforcing portion.

The first fixing portion F1 of the first flexible printed circuit board 7 may be disposed on or coupled to the first plate assembly PA1 through mechanical fastening such as bonding or screw fastening including an adhesive material or a bonding material. The first fixing portion F1 may include, for example, at least one screw hole for screw fastening to the first plate assembly PA1.

The second fixing portion F2 of the first flexible printed circuit board 7 may be disposed on or coupled to the second plate assembly PA2 through mechanical fastening such as bonding or screw fastening including an adhesive material or a bonding material. The second fixing portion F2 may include, for example, at least one screw hole for screw fastening to the second plate assembly PA2.

When the foldable electronic device 1 switches between the unfolded state and the folded state, the relative position between the first fixing portion F1 and the second fixing portion F2 may change, and the third area 73 of the first flexible printed circuit board 7 may be disposed in a shape corresponding to the relative position between the first fixing portion F1 and the second fixing portion F2.

The second flexible printed circuit board 8 may include a fourth area 81, a fifth area 82, and/or a sixth area 83 disposed between the fourth area 81 and the fifth area 82. The sixth area 83 may extend the fourth area 81 and the fifth area 82. The fourth area 81 may extend from the sixth area 83 to the third connector 8A. The fifth area 82 may extend from the sixth area 83 to the fourth connector 8B. The fourth area 72, the fifth area 75, and the sixth area 76 may be substantially flexible.

The fourth area 81 of the second flexible printed circuit board 8 may penetrate the first opening 313 in the first frame 111. The fifth area 82 of the second flexible printed circuit board 8 may penetrate the fourth opening 314 in the second frame 121.

The second flexible printed circuit board 8 may include a third fixing portion F3 and a fourth fixing portion F4. The third fixing portion F3 may be provided (or formed) between the fourth area 81 and the sixth area 83 or at a boundary between the fourth area 81 and the sixth area 83. The fourth fixing portion F4 may be provided (or formed) between the fifth area 82 and the sixth area 83 or at a boundary between the fifth area 82 and the sixth area 83. The sixth area F6 may actually refer to a portion extending the third fixing portion F3 and the fourth fixing portion F4 of the second flexible printed circuit board 8 between the third fixing portion F3 and the fourth fixing portion F4.

The third fixing portion F3 and/or the fourth fixing portion F4 of the second flexible printed circuit board 8 may be configured to be less flexible than other portions of the second flexible printed circuit board 8. The third fixing portion F3 and/or the fourth fixing portion F4 may be substantially rigid. The third fixing portion F3 may be rigid by including, for example, a third reinforcing portion (or a third reinforcing member or a third reinforcing structure) such as a stiffener. The fourth fixing portion F4 may be rigid by including, for example, a fourth reinforcing portion (or a fourth reinforcing member or a fourth reinforcing structure) such as a stiffener. The third fixing portion F3 may be referred to as a third rigid portion, and the fourth fixing portion F4 may be referred to as a fourth rigid portion.

The third fixing portion F3 and/or the fourth fixing portion F4 of the second flexible printed circuit board 8 may be implemented to be substantially rigid and flat. The third fixing portion F3 and/or the fourth fixing portion F4 may be substantially rigid and flat by including, for example, a reinforcing plate (or a reinforcing film or a reinforcing layer) (e.g., a stiffener). The reinforcing plate may include, for example, FR4 or PI.

The third fixing portion F3 and/or the fourth fixing portion F4 of the second flexible printed circuit board 8 may be configured to have a thickness greater than those of other portions of the second flexible printed circuit board 8. In an embodiment, the third fixing portion F3 and/or the fourth fixing portion F4 may have more laminated layers than those in other portions of the second flexible printed circuit board 8. This may allow the third fixing portion F3 and/or the fourth fixing portion F4 to be configured to be less flexible than other portions of the second flexible printed circuit board 8.

The second flexible printed circuit board 8 may be implemented as an RFPCB, and the third fixing portion F3 and/or the fourth fixing portion F4 may be substantially rigid without a separate reinforcing portion.

The third fixing portion F3 of the second flexible printed circuit board 8 may be disposed on or coupled to the third plate assembly PA3 through mechanical fastening such as bonding or screw fastening including an adhesive material or a bonding material. The third fixing portion F3 may include, for example, at least one screw hole for screw fastening to the third plate assembly PA3.

The fourth fixing portion F4 of the second flexible printed circuit board 8 may be disposed on or coupled to the fourth plate assembly PA4 through mechanical fastening such as bonding or screw fastening including an adhesive material or a bonding material. The fourth fixing portion F4 may include, for example, at least one screw hole for screw fastening to the fourth plate assembly PA4.

When the foldable electronic device 1 switches between the unfolded state and the folded state, the relative position between the third fixing portion F3 and the fourth fixing portion F4 may change, and the sixth area 83 of the second flexible printed circuit board 8 may be disposed in a shape corresponding to the relative position between the third fixing portion F3 and the fourth fixing portion F4.

The second surface area 13A of the hinge housing 13 may include a fourth recess R4 corresponding to the third area 73 of the first flexible printed circuit board 7. The second surface area 13A of the hinge housing 13 may include a fifth recess R5 corresponding to the sixth area 83 of the second flexible printed circuit board 8. The fourth recess R4 may be located between the first recess R1 and the third recess R3. The fifth recess R5 may be located between the second recess R2 and the third recess R3.

When the foldable electronic device 1 switches from the folded state to the unfolded state, the third area 73 of the first flexible printed circuit board 7 may be inserted from the outside of the fourth recess R4 of the hinge housing 13 into the fourth recess R4 or may be inserted into the fourth recess R4 to a greater extent than in the folded state of the foldable electronic device 1. For example, when the foldable electronic device 1 switches from the unfolded state to the folded state, the third area 73 of the first flexible printed circuit board 7 may be located outside the fourth recess R4 of the hinge housing 13.

In the unfolded state of the foldable electronic device 1, the surface of the fourth recess R4 of the hinge housing 13 may support the third area 73 of the first flexible printed circuit board 7. When the foldable electronic device 1 switches from the folded state to the unfolded state, the third area 73 of the first flexible printed circuit board 7 may be deformed while being supported by the surface of the fourth recess R4 of the hinge housing 13. The fourth recess R4 may be configured to reduce bending stress in the third area 73 of the first flexible printed circuit board 7 in the unfolded state of the foldable electronic device 1.

When the foldable electronic device 1 switches from the folded state to the unfolded state, the sixth area 83 of the second flexible printed circuit board 8 may be inserted from the outside of the fifth recess R5 of the hinge housing 13 into the fifth recess R5 or may be inserted into the fifth recess R5 to a greater extent than in the folded state of the foldable electronic device 1. For example, when the foldable electronic device 1 switches from the unfolded state to the folded state, the six area 83 of the second flexible printed circuit board 8 may be located outside the fifth recess R5 of the hinge housing 13.

In the unfolded state of the foldable electronic device 1, the surface of the fifth recess R5 of the hinge housing 13 may support the sixth area 83 of the second flexible printed circuit board 8. When the foldable electronic device 1 switches from the folded state to the unfolded state, the sixth area 83 of the second flexible printed circuit board 8 may be deformed while being supported by the surface of the fifth recess R5 of the hinge housing 13. The fifth recess R5 may be configured to reduce bending stress in the sixth area 83 of the second flexible printed circuit board 8 in the unfolded state of the foldable electronic device 1.

The third plate 63 of the first plate assembly PA1 may include an opening 63H corresponding to the first fixing portion F1 of the first flexible printed circuit board 7. The first fixing portion F1 may be inserted into the opening 63H in the third plate 63 and coupled to the first plate 61 of the first plate assembly PA1.

The first plate 61 of the first plate assembly PA1 may include an opening 61H and screw holes SH31 and SH32 corresponding to the first fixing portion F1 of the first flexible printed circuit board 7. A portion of the first fixing portion F1 may be inserted into the opening 61H in the first plate 61. The first fixing portion F1 inserted into the opening 63H in the third plate 63 may be coupled to the first plate 61 through screw fastening corresponding to the screw holes SH31 and SH32.

The portion of the first plate 61 including the opening 61H and the screw holes SH31 and SH32 may be coupled to the first fixing portion F1 of the first flexible printed circuit board 7 and may cover the opening 63H in the third plate 63 to provide a partial surface area of the first surface 601 supporting the third display area 153 of the first display module 15.

The fourth plate 64 of the second plate assembly PA2 may include an opening 64H corresponding to the second fixing portion F2 of the first flexible printed circuit board 7. The second fixing portion F2 may be inserted into the opening 64H in the fourth plate 64 and coupled to the second plate 62 of the second plate assembly PA2.

The second plate 62 of the second plate assembly PA2 may include an opening 62H and screw holes SH41 and SH42 corresponding to the second fixing portion F2 of the first flexible printed circuit board 7. A portion of the second fixing portion F2 may be inserted into the opening 62H in the second plate 62. The second fixing portion F2 inserted into the opening 64H in the fourth plate 64 may be coupled to the second plate 62 through screw fastening corresponding to the screw holes SH41 and SH42.

The portion of the second plate 62 including the opening 62H and the screw holes SH41 and SH42 may be coupled to the second fixing portion F2 of the first flexible printed circuit board 7 and may cover the opening 64H in the fourth plate 64 to provide a partial surface area of the first surface 602 supporting the third display area 153 of the first display module 15.

The seventh plate 67 of the third plate assembly PA3 may include an opening 67H corresponding to the third fixing portion F3 of the second flexible printed circuit board 8. The third fixing portion F3 may be inserted into the opening 67H in the seventh plate 67 and coupled to the fifth plate 65 of the third plate assembly PA3.

The fifth plate 65 of the third plate assembly PA3 may include an opening 65H and screw holes SH51 and SH52 corresponding to the third fixing portion F3 of the second flexible printed circuit board 8. A portion of the third fixing portion F3 may be inserted into the opening 65H in the fifth plate 65. The third fixing portion F3 inserted into the opening 67H in the seventh plate 67 may be coupled to the fifth plate 65 through screw fastening corresponding to the screw holes SH51 and SH52.

The portion of the fifth plate 65 including the opening 65H and the screw holes SH51 and SH52 may be coupled to the third fixing portion F3 of the second flexible printed circuit board 8 and may cover the opening 67H in the seventh plate 67 to provide a partial surface area of the third surface 603 supporting the third display area 153 of the first display module 15.

The eighth plate 68 of the fourth plate assembly PA4 may include an opening 68H corresponding to the fourth fixing portion F4 of the second flexible printed circuit board 8. The fourth fixing portion F4 may be inserted into the opening 68H in the eighth plate 68 and coupled to the sixth plate 66 of the fourth plate assembly PA4.

The sixth plate 66 of the fourth plate assembly PA4 may include an opening 66H and screw holes SH61 and SH62 corresponding to the fourth fixing portion F4 of the second flexible printed circuit board 8. A portion of the fourth fixing portion F4 may be inserted into the opening 66H in the sixth plate 66. The fourth fixing portion F4 inserted into the opening 68H in the eighth plate 68 may be coupled to the sixth plate 66 through screw fastening corresponding to the screw holes SH61 and SH62.

The portion of the sixth plate 66 including the opening 66H and the screw holes SH61 and SH62 may be coupled to the fourth fixing portion F4 of the second flexible printed circuit board 8 and may cover the opening 68H in the eighth plate 68 to provide a partial surface area of the fourth surface 604 supporting the third display area 153 of the first display module 15.

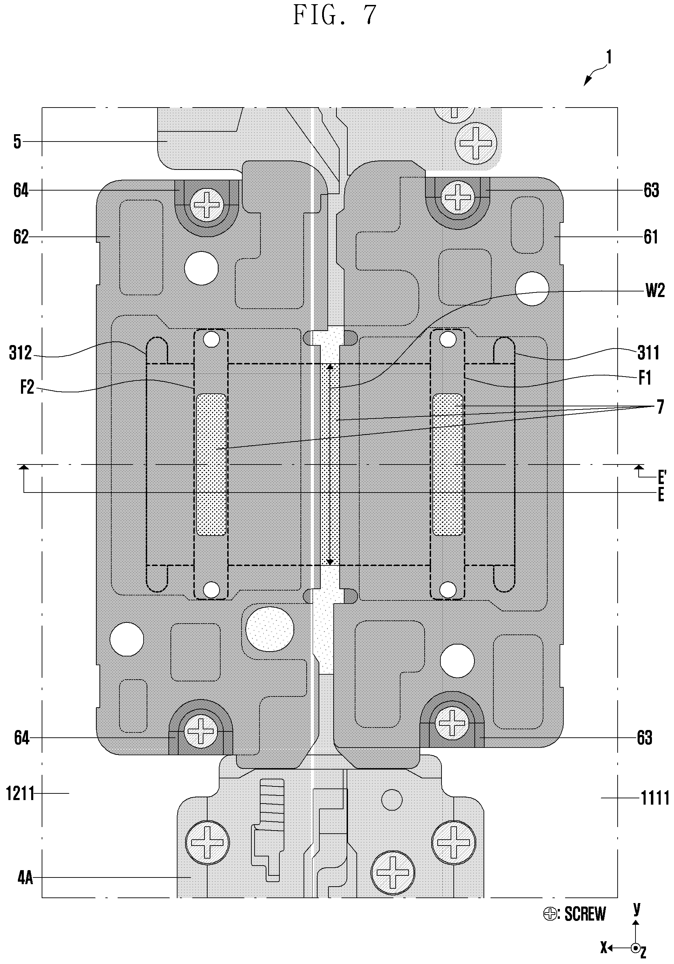

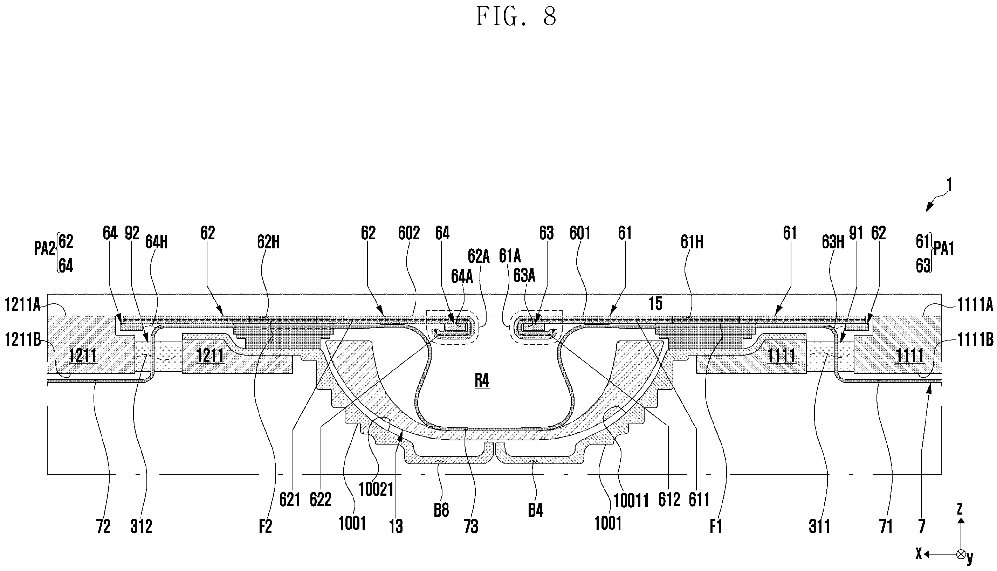

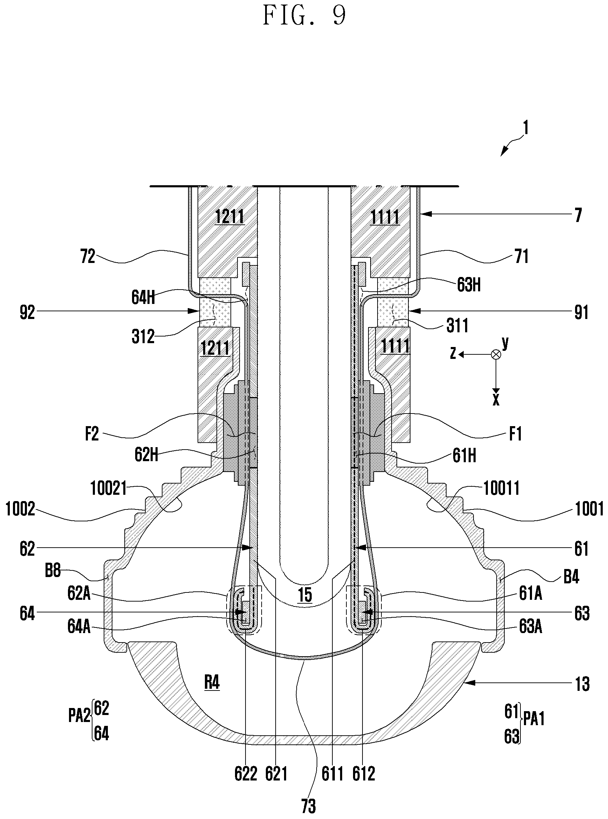

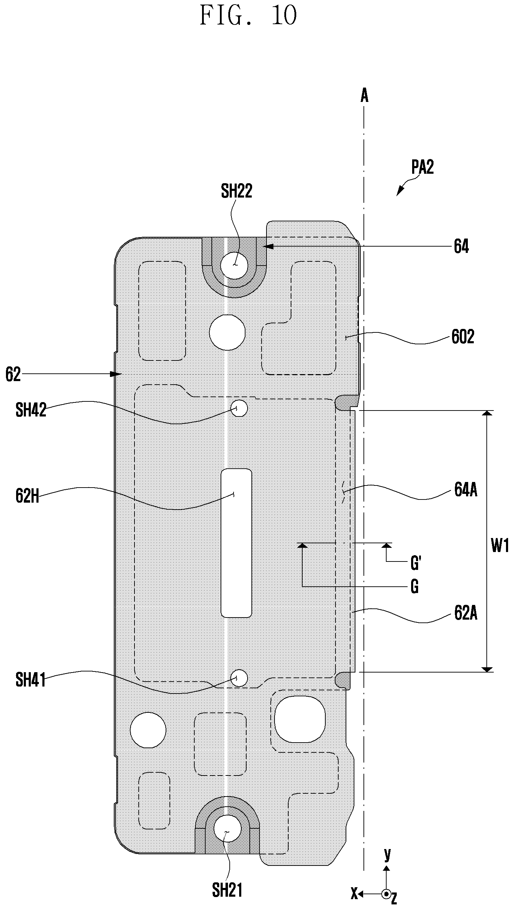

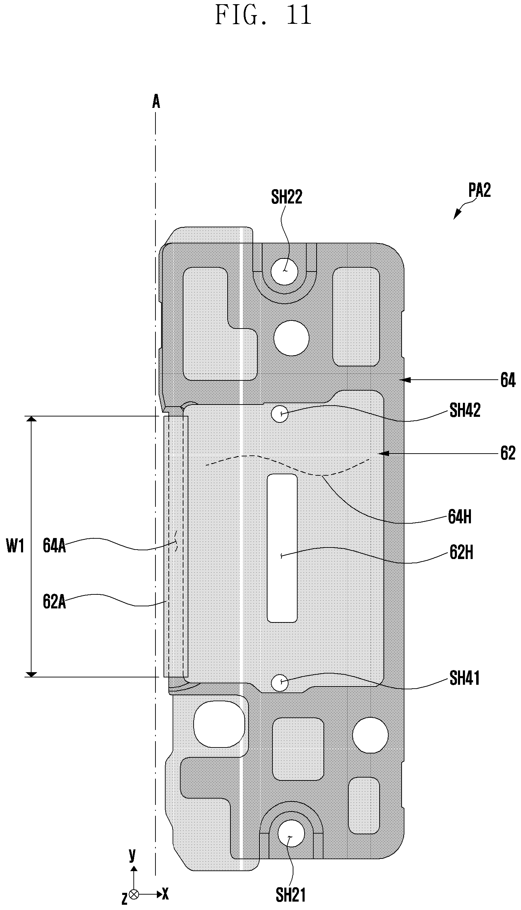

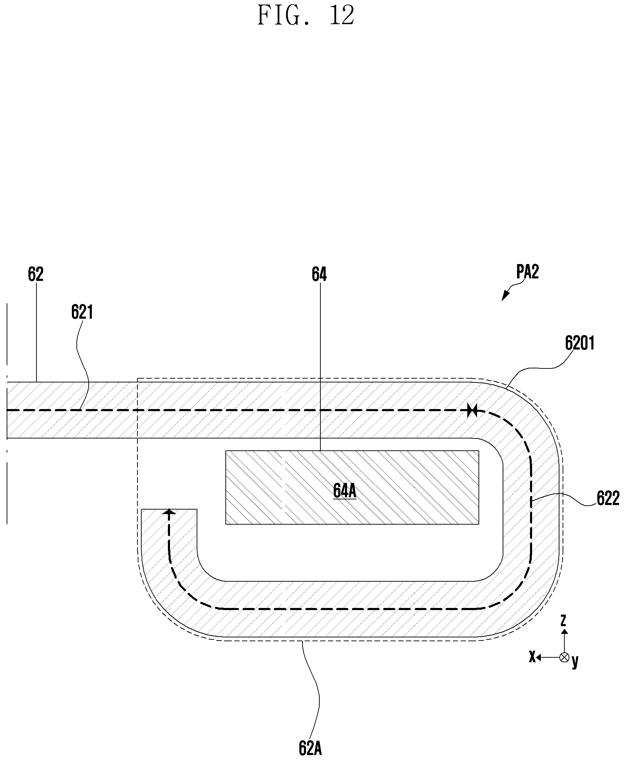

FIG. 7 is a view illustrating a portion of a foldable electronic device 1 according to an embodiment of the disclosure in the unfolded state. FIG. 8 is a cross-sectional view of the foldable electronic device 1 according to an embodiment of the disclosure in the unfolded state taken along line E-E' in FIG. 7. FIG. 9 is a cross-sectional view of the foldable electronic device 1 according to an embodiment of the disclosure. FIGS. 10 and 11 are views illustrating a second plate assembly PA2 according to an embodiment of the disclosure. FIG. 12 is a cross-sectional view of the second plate assembly PA2 according to an embodiment of the disclosure taken along line G-G' in FIG. 10.

Referring to FIGS. 7, 8, 9, 10, 11, and 12, the foldable electronic device 1 may include a first support plate 1111, a second support plate 1211, a first display module 15, a first hinge module 141, a third hinge module 143, a first plate 61, a second plate 62, a third plate 63, a fourth plate 64, a hinge housing 13, a first flexible printed circuit board 7, a first seal member 91, and/or a second seal member 92. Descriptions of some components that have the same reference numerals as those illustrated in FIGS. 1, 2, 3, 4, 5, and 7 will be omitted.

The first support plate 1111 may include a first cover area 1001 extending the fourth side surface portion B4 of the first side 1112 (see FIG. 3). In the unfolded state of the foldable electronic device 1, the first cover area 1001 may be positioned relative to the hinge housing 13 to cover a portion of the hinge housing 13 with reference to the center line A of the foldable electronic device 1 (see FIG. 1). In the folded state of the foldable electronic device 1, the first cover area 1001 may be positioned relative to the hinge housing 13 not to cover a portion of the hinge housing 13 with reference to the center line A of the foldable electronic device 1.

The hinge housing 13 may include a third curved surface exposed to the outside in the folded state of the foldable electronic device 1 with reference to the center line A (see FIG. 1) of the foldable electronic device 1, and the first cover area 1001 of the first support plate 1111 may include a first curved surface 10011 corresponding to the third curved surface of the hinge housing 13.

The fourth side surface portion B4 may be defined or interpreted as an element included in the first cover area 1001 of the first support plate 1111 rather than the first side 1112 (see FIG. 3).

The second support plate 1211 may include a second cover area 1002 extending the eighth side surface portion B8 of the second side 1212 (see FIG. 3). In the unfolded state of the foldable electronic device 1, the second cover area 1002 may be positioned relative to the hinge housing 13 to cover a portion of the hinge housing 13 with reference to the center line A of the foldable electronic device 1 (see FIG. 1). In the folded state of the foldable electronic device 1, the second cover area 1002 may be positioned relative to the hinge housing 13 not to cover a portion of the hinge housing 13 with reference to the center line A of the foldable electronic device 1.

The hinge housing 13 may include a fourth curved surface exposed to the outside in the folded state of the foldable electronic device 1 with reference to the center line A (see FIG. 1) of the foldable electronic device 1, and the second cover area 1002 of the second support plate 1211 may include a second curved surface 10021 corresponding to the fourth curved surface of the hinge housing 13.

The eighth side surface portion B8 may be defined or interpreted as an element included in the second cover area 1002 of the second support plate 1211 rather than the second side 1212 (see FIG. 3).

A combination of the first curved surface 10011 of the first support plate 1111 and the second curved surface 10021 of the second support plate 1211 may provide a recess in which the hinge housing 13 is located in the unfolded state of the foldable electronic device 1.

The first cover area 1001 may be provided as a separate member configured to be coupled to the first frame 111 (see FIG. 4) or the first support plate 1111. The second cover area 1002 may be provided as a separate member configured to be coupled to the second frame 121 (see FIG. 4) or the second support plate 1211.

The first fixing portion F1 of the first flexible printed circuit board 7 may be inserted into the opening 63H in the third plate 63. A portion of the first fixing portion F1 may be inserted into the opening 61H in the first plate 61. A portion of the first fixing portion F1 may be fitted into, for example, the opening 61H in the first plate 61.

The first fixing portion F1 of the first flexible printed circuit board 7 may be at least partially located between the first plate 61 and the first support plate 1111 (or the first cover area 1001). The first fixing portion F1 may be inserted into the opening 61H in the first plate 61 and coupled to the first plate 61. The first support plate 1111 (or the first cover area 1001) may support the first fixing portion F1 toward the first plate 61.

The second fixing portion F2 of the first flexible printed circuit board 7 may be inserted into the opening 64H in the fourth plate 64. A portion of the second fixing portion F2 may be inserted into the opening 62H in the second plate 62. A portion of the second fixing portion F2 may be fitted into, for example, the opening 62H in the second plate 62.

The second fixing portion F2 of the first flexible printed circuit board 7 may be at least partially located between the second plate 62 and the second support plate 1211 (or the second cover area 1002). The second fixing portion F2 may be inserted into the opening 62H in the second plate 62 and coupled to the second plate 62. The second support plate 1211 (or the second cover area 1002) may support the second fixing portion F2 toward the second plate 62.

When the foldable electronic device 1 switches from the folded state to the unfolded state, the third area 73 of the first flexible printed circuit board 7 may be inserted into the fourth recess R4 of the hinge housing 13. When the foldable electronic device 1 switches from the folded state to the unfolded state, the third area 73 of the first flexible printed circuit board 7 may be deformed while being supported by the surface of the fourth recess R4 of the hinge housing 13. The fourth recess R4 may be configured to reduce bending stress in the third area 73 of the first flexible printed circuit board 7 in the unfolded state of the foldable electronic device 1.

Although not separately illustrated, the second flexible printed circuit board 8 (see FIG. 4) may be arranged relative to the third plate assembly PA3 and the fourth plate assembly PA4 in a manner substantially the same as or similar to the manner in which the first flexible printed circuit board 7 is arranged relative to the first plate assembly PA1 and the second plate assembly PA2. The third fixing portion F3 (see FIG. 4) of the second flexible printed circuit board 8 may be at least partially located between the fifth plate 65 (see FIG. 4) and the first support plate 1111 (or the first cover area 1001). The third fixing portion F3 may be inserted into the opening 65H in the fifth plate 65 (see FIG. 4) and coupled to the fifth plate 65. The first support plate 1111 (or the first cover area 1001) may support the third fixing portion F3 toward the fifth plate 65.

The second fixing portion F4 (see FIG. 4) of the second flexible printed circuit board 8 may be at least partially located between the sixth plate 66 (see FIG. 4) and the second support plate 1211 (or the second cover area 1002). The fourth fixing portion F4 may be inserted into the opening 66H in the sixth plate 66 (see FIG. 4) and coupled to the sixth plate 66. The second support plate 1211 (or the second cover area 1002) may support the fourth fixing portion F4 toward the fourth plate 66.

The first area 71 of the first flexible printed circuit board 7 may penetrate the first opening 311 in the first support plate 1111.

The first seal member 91 may be placed in the first opening 311. For example, the first seal member 91 may be provided through a method of placing (filling) an adhesive material (e.g. a liquid gasket (cured-in-place gasket (CIPG)) in the first opening 311 and then curing the filled adhesive material (e.g., curing through an optical reaction or thermal reaction).

The first area 71 of the first flexible printed circuit board 7 may be fixed to the first support plate 1111 via the first seal member 91.

The second area 72 of the first flexible printed circuit board 7 may penetrate the second opening 312 in the second support plate 1211.

The second seal member 92 may be placed in the second opening 312 in the second support plate 1211. For example, the second seal member 92 may be provided through a method of placing (filling) an adhesive material (e.g., a liquid gasket) in the second opening 312 and then curing the filled adhesive material (e.g., curing through an optical reaction or thermal reaction).

The second area 72 of the first flexible printed circuit board 7 may be fixed to the second support plate 1211 via the second seal member 92.

The foldable electronic device 1 may include a third seal member (not separately illustrated) placed in the third opening 313 (see FIG. 4) in the first support plate 1111. The fourth area 81 (see FIG. 4) may be fixed to the first support plate 1111 via the third seal member. For example, the third seal member may be provided through a method of filling the third opening 313 (see FIG. 4) with an adhesive material (e.g., a liquid gasket) and then curing the filled adhesive material (e.g., curing through an optical reaction or thermal reaction).

The foldable electronic device 1 may include a fourth seal member (not separately illustrated) placed in the fourth opening 314 (see FIG. 4) in the second support plate 1211. The fifth area 82 (see FIG. 5) may be fixed to the second support plate 1211 via the fourth seal member. For example, the fourth seal member may be provided through a method of filling the fourth opening 314 with an adhesive material (e.g., a liquid gasket) and then curing the filled adhesive material (e.g., curing through an optical reaction or thermal reaction).

The first seal member 91 may include a first elastic member or a first flexible member that may be resiliently placed in the first opening 311 in the first support plate 1111 which is penetrated by the first flexible printed circuit board 7.

The second seal member 92 may include a second elastic member or a second flexible member that may be resiliently placed in the second opening 312 in the first support plate 1211 which is penetrated by the first flexible printed circuit board 7.

The third seal member (not separately illustrated) may include a third elastic member or a third flexible member that may be resiliently placed in the third opening 313 in the first support plate 1111 (see FIG. 4) which is penetrated by the second flexible printed circuit board 8.

The fourth seal member (not separately illustrated) may include a fourth elastic member or a fourth flexible member that may be resiliently placed in the fourth opening 314 in the second support plate 1211 (see FIG. 4) which is penetrated by the second flexible printed circuit board 8.

The foldable electronic device 1 may include a first waterproof area (or a first waterproof space) and a third waterproof area (or a second waterproof space). The first waterproof area may be a space between the first display area 151 (see FIG. 4) of the first display module 15 and the first frame 111 (see FIG. 4). The third waterproof area may be a space between the first cover 112 (see FIG. 1) and the first frame 111 (see FIG. 4). Multiple electrical components may be located in the first waterproof area and the third waterproof area. The first seal member 91 placed in the first opening 311 in the first support plate 1111 and the third seal member (not separately illustrated) placed in the third opening 313 in the first support plate 1111 (see FIG. 4) may separate the first waterproof area and the third waterproof area. For example, the first seal member 91 and the third seal member may reduce moisture flowing into the foldable electronic device 1 or prevent the moisture from flowing (moving) from the first waterproof area to the third waterproof area or from the third waterproof area to the first waterproof area through the first opening 311 and/or the third opening 313 in the first support plate (see FIG. 4).

The foldable electronic device 1 may include a second waterproof area (or a second waterproof space) and a fourth waterproof area (or a fourth waterproof space). The second waterproof area may be a space between the second display area 152 (see FIG. 4) of the first display module 15 and the second frame 121 (see FIG. 4). The fourth waterproof area may be a space between the second cover 122 (see FIG. 1) and the second frame 121 (see FIG. 4). Multiple electrical components may be located in the second waterproof area and the fourth waterproof area. The second seal member 92 placed in the second opening 312 in the second support plate 1211 and the fourth seal member (not separately illustrated) placed in the fourth opening 314 in the second support plate 1211 (see FIG. 4) may separate the second waterproof area and the fourth waterproof area. For example, the second seal member 92 and the fourth seal member may reduce moisture flowing into the foldable electronic device 1 or prevent the moisture from flowing (moving) from the second waterproof area to the fourth waterproof area or from the fourth waterproof area to the second waterproof area through the second opening 312 and/or the fourth opening 314 in the second support plate 1211 (see FIG. 4).

The first plate 61 may include a first end portion 61A that is located to support the third area 73 of the first flexible printed circuit board 7 when the foldable electronic device 1 switches from the unfolded state to the folded state.

The first end portion 61A of the first plate 61 may be in contact with the third area 73 of the first flexible printed circuit board 7 in the folded state of the foldable electronic device 1. For example, in the folded state of the foldable electronic device 1, the first end portion 61A of the first plate 61 may support the third area 73 of the first flexible printed circuit board 7. When the foldable electronic device 1 switches from the unfolded state to the folded state, the third area 73 of the first flexible printed circuit board 7 may be deformed while being supported by the first end portion 61A of the first plate 61.

The surface of the first end portion 61A of the first plate 61 may include a first curved surface to suppress or prevent damage (e.g., cracking) of the third area 73 of the first flexible printed circuit board 7. The first curved surface included in the first end portion 61A may help the third area 73 of the first flexible printed circuit board 7 be disposed while reducing bending stress in the folded state of the foldable electronic device 1.

When the third area 73 of the first flexible printed circuit board 7 is supported and disposed on the first end portion 61A of the first plate 61, the first curved surface of the first end portion 61A of the first plate 61 may prevent the third area 73 of the first flexible printed circuit board 7 from being bent with a radius of curvature that is equal to or smaller than the critical radius of curvature, thereby reducing or preventing damage to the third area 73. For example, in a comparative example where the first end portion includes a bent surface and a curved surface having a radius of curvature that is equal to or smaller than the critical radius of curvature, the third area 73 of the first flexible printed circuit board 7 may include a portion supported by the first end portion and curved with a radius of curvature that is equal to or smaller than the critical radius of curvature, and as a result, bending stress (e.g., yield stress) that causes damage or permanent deformation in the third area 73 may occur. For example, in the comparative example where the first end portion includes a bent surface and a curved surface having a radius of curvature that is equal to or smaller than the critical radius of curvature, the third area 73 of the first flexible printed circuit board 7 may include a portion supported by the first end portion and curved with a radius of curvature that is equal to or smaller than the critical radius of curvature, and when the foldable electronic device repeatedly switches between the unfolded state and the folded state, the bending stress occurring in the third area 73 may cause deterioration or loss of elasticity due to fatigue accumulation, causing damage or permanent deformation in the third area 73.

The first plate 61 may include a first flat surface section 611 and a first curved surface section 612 when viewed in a cross section perpendicular to the center line A of the foldable electronic device 1. The first flat surface section 611 may support the third display area 153 (FIG. 4) of the first display module 15 to be flat in the unfolded state of the foldable electronic device 1. The first curved surface section 612 of the first plate 61 may be curved and extended from the first flat surface section 611 to include a first curved surface. The first end portion 61A of the first plate 61 may include the first curved surface section 612.

The first end portion 61A of the first plate 61 may be shaped to have the first curved surface through bending or hemming. The first end portion 61A may also be referred to as a first bent end portion or a first hemmed end portion.

The illustrated example discloses shaping the first end portion 61A having the first curved surface by bending or hemming the first plate 61, which is a metal plate, but the first end portion 61A having the first curved surface may be provided through various methods, such as attaching a separate curved member having the first curved surface to the first plate 61.

In order to reduce the stress effect of the first end portion 61A of the first plate 61 on the entire width W2 of the third area 73 of the first flexible printed circuit board 7 (see FIG. 7) extending in the direction of the center line A of the foldable electronic device 1, the first end portion 61A of the first plate 61 may have a width greater than the width W2 of the third area 73 of the first flexible printed circuit board 7.

When viewed in a cross section perpendicular to the center line A of the foldable electronic device 1, the third plate 63 may include a third end portion 63A surrounded by the first end portion 61A of the first plate 61. The first end portion 61A of the first plate 61 may be disposed to surround the third end portion 63A of the third plate 63 to have the first curved surface. The first end portion 61A of the first plate 61 may be defined or interpreted as a combination of the first curved surface section 612 including the first curved surface and the portion of the first flat surface section 611 surrounding the third end portion 63A of the third plate 63. By arranging the first end portion 61A of the first plate 61 to surround the third end portion 63A of the third plate 63, the coupling force between the first plate 61 and the third plate 63 can be improved.

The third end portion 63A of the third plate 63 may be included in the portion of the third plate 63 surrounding the opening 63H.

In order to reduce the thickness or volume of the combination of the first end portion 61A of the first plate 61 and the third end portion 63A of the third plate 63, the first end portion 61A may be provided (or formed) to be relatively thin compared to other portions of the first plate 61.

In order to reduce the thickness or volume of the combination of the first end portion 61A of the first plate 61 and the third end portion 63A of the third plate 63, the third end portion 63A may be provided (or formed) to be relatively thin compared to other portions of the third plate 63.

The second plate 62 may include a second end portion 62A that is located to support the third area 73 of the first flexible printed circuit board 7 when the foldable electronic device 1 switches from the unfolded state to the folded state.

The second end portion 62A of the second plate 62 may be in contact with the third area 73 of the first flexible printed circuit board 7 in the folded state of the foldable electronic device 1. For example, in the folded state of the foldable electronic device 1, the second end portion 62A of the second plate 62 may support the third area 73 of the first flexible printed circuit board 7. When the foldable electronic device 1 switches from the unfolded state to the folded state, the third area 73 of the first flexible printed circuit board 7 may be deformed while being supported by the second end portion 62A of the second plate 62.

The surface 6201 of the second end portion 62A of the second plate 62 may include a second curved surface to suppress or prevent damage to (e.g., cracking of) the third area 73 of the first flexible printed circuit board 7. The second curved surface included in the second end portion 62A may help the third area 73 of the first flexible printed circuit board 7 be disposed while reducing bending stress in the folded state of the foldable electronic device 1.

When the third area 73 of the first flexible printed circuit board 7 is supported and disposed on the second end portion 62A of the second plate 62, the second curved surface of the second end portion 62A of the second plate 62 may prevent the third area 73 of the first flexible printed circuit board 7 from being bent with a radius of curvature that is equal to or smaller the critical radius of curvature, thereby reducing or preventing damage to the third area 73. For example, in a comparative example where the second end portion includes a bent surface and a curved surface having a radius of curvature that is equal to or smaller than the critical radius of curvature, the third area 73 of the first flexible printed circuit board 7 may include a portion supported by the second end portion and curved with a radius of curvature that is equal to or smaller than the critical radius of curvature, and as a result, bending stress (e.g., yield stress) that causes damage or permanent deformation in the third area 73 may occur. For example, in the comparative example where the second end portion includes a bent surface and a curved surface having a radius of curvature that is equal to or smaller than the critical radius of curvature, the third area 73 of the first flexible printed circuit board 7 may include a portion supported by the second end portion and curved with a radius of curvature that is equal to or smaller than the critical radius of curvature, and when the foldable electronic device repeatedly switches between the unfolded state and the folded state, the bending stress occurring in the third area 73 may cause deterioration or loss of elasticity due to fatigue accumulation, causing damage or permanent deformation in the third area 73.

The second plate 62 may include a second flat surface section 621 and a second curved surface section 622 when viewed in a cross section perpendicular to the center line A of the foldable electronic device 1. The second flat surface section 621 may support the third display area 153 (FIG. 4) of the first display module 15 to be flat in the unfolded state of the foldable electronic device 1. The second curved surface section 622 of the second plate 62 may be curved and extended from the second flat surface section 621 to include a second curved surface. The second end portion 62A of the second plate 62 may include the second curved surface section 622.

The second end portion 62A of the second plate 62 may be shaped to have the second curved surface through bending or hemming. The second end portion 62A may also be referred to as a second bent end portion or a second hemmed end portion.

The illustrated example discloses shaping the second end portion 62A having the second curved surface by bending or hemming the second plate 62, which is a metal plate, but the second end portion 62A having the second curved surface may be provided through various methods, such as attaching a separate curved member having the second curved surface to the second plate 62.

In order to reduce the stress effect of the second end portion 62A of the second plate 62 on the entire width W2 of the third area 73 of the first flexible printed circuit board 7 (see FIG. 7) extending in the direction of the center line A of the foldable electronic device 1, the second end portion 62A of the second plate 62 may have a width W1 (see FIG. 10) greater than the width W2 of the third area 73 of the first flexible printed circuit board 7.

When viewed in a cross section perpendicular to the center line A of the foldable electronic device 1, the fourth plate 64 may include a fourth end portion 64A surrounded by the second end portion 62A of the second plate 62. The second end portion 62A of the second plate 62 may be disposed to surround the fourth end portion 64A of the fourth plate 64 to have the second curved surface. The second end portion 62A of the second plate 62 may be defined or interpreted as a combination of the second curved surface section 622 including the second curved surface and the portion of the second flat surface section 621 surrounding the fourth end portion 64A of the fourth plate 64. By arranging the second end portion 62A of the second plate 62 to surround the fourth end portion 64A of the fourth plate 64, the coupling force between the second plate 62 and the fourth plate 64 can be improved.

The fourth end portion 64A may be included in the portion of the fourth plate 64 surrounding the opening 64H.

In order to reduce the thickness or volume of the combination of the second end portion 62A of the second plate 62 and the fourth end portion 64A of the fourth plate 64, the second end portion 62A may be provided (or formed) to be relatively thin compared to other portions of the second plate 62.

In order to reduce the thickness or volume of the combination of the second end portion 62A of the second plate 62 and the fourth end portion 64A of the fourth plate 64, the fourth end portion 64A may be provided (or formed) to be relatively thin compared to other portions of the fourth plate 64.

In the folded state of the foldable electronic device 1, the first surface 601 included in the first plate 61 and the second surface 602 included in the second plate 62 may face each other with the curved third display area 153 of the first display module 15 interposed therebetween. In the folded state of the foldable electronic device 1, the first flat surface section 611 of the first plate 61 and the second flat surface section 621 of the second plate 62 may face each other. The first surface 601 may be substantially provided (or formed) by the first flat surface section 611 of the first plate 61. The second surface 602 may be substantially provided (or formed) by the second flat surface section 621 of the second plate 62.

In the unfolded state of the foldable electronic device 1, the first surface 601 included in the first plate 61 and the second surface 602 included in the second plate 62 may support the third display area 153 of the first display module 15 to be flat.

When viewed in a cross section perpendicular to the direction of the center line A of the foldable electronic device 1, the first end portion 61A of the first plate 61 and the second end portion 62A of the second plate 62 may face each other by being closer to each other in the unfolded state of the foldable electronic device 1 than in the folded state. When viewed in a cross section perpendicular to the direction of the center line A of the foldable electronic device 1, the first end portion 61A of the first plate 61 and the second end portion 62A of the second plate 62 may be further away from each other in the folded state of the foldable electronic device 1 than in the folded state.

The first curved surface of the first end portion 61A of the first plate 61 and the second curved surface of the second end portion 62A of the second plate 62 may guide the deformation of the third area 73 of the first flexible printed circuit board 7 such that the third area 73 is arranged in a predetermined shape when the foldable electronic device 1 switches from the unfolded state to the folded state.

The first curved surface of the first end portion 61A of the first plate 61 and the second curved surface of the second end portion 62A of the second plate 62 may be provided (or formed) to be symmetrical to each other with respect to the center line A of the foldable electronic device 1.

The third area 73 of the first flexible printed circuit board 7 may be arranged in a symmetrical shape with reference to the center line A of the foldable electronic device 1 by being supported by the first end portion 61A of the first plate 61 and the second end portion 62A of the second plate 62.

The fifth plate 65 (see FIG. 4) of the third plate assembly PA3 (see FIG. 4) may include a fifth end portion (not separately illustrated) provided to be substantially the same as or similar to the first end portion 61A of the first plate 61 included in the first plate assembly PA1.

The seventh plate 67 (see FIG. 4) of the third plate assembly PA3 (see FIG. 4) may include a seventh end portion (not separately illustrated) provided to be substantially the same as or similar to the third end portion 63A of the third plate 63 included in the first plate assembly PA1.

The sixth plate 66 (see FIG. 4) of the fourth plate assembly PA4 (see FIG. 4) may include a sixth end portion (not separately illustrated) provided to be substantially the same as or similar to the second end portion 62A of the second plate 62 included in the second plate assembly PA2.

The eighth plate 68 (see FIG. 4) of the fourth plate assembly PA4 (see FIG. 4) may include an eighth end portion (not separately illustrated) provided to be substantially the same as or similar to the fourth end portion 64A of the fourth plate 64 included in the second plate assembly PA2.

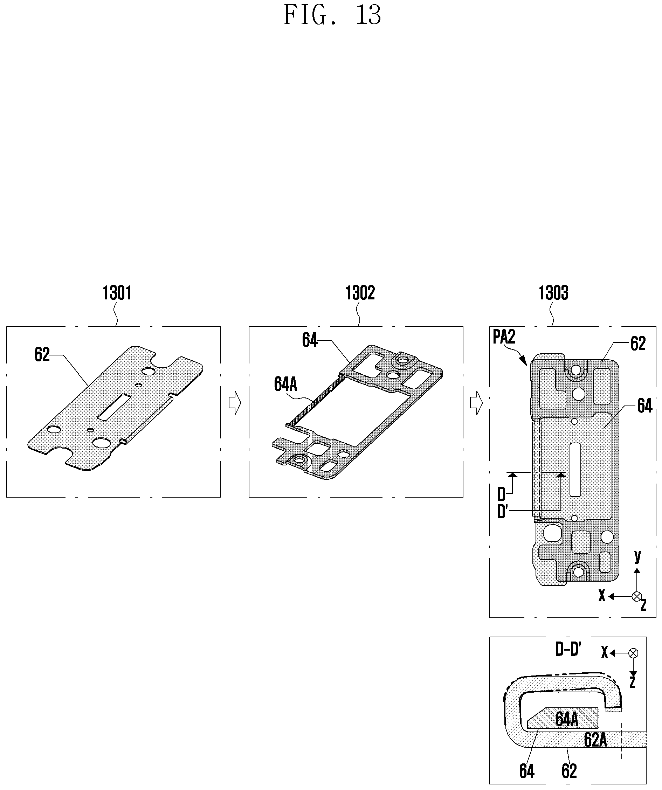

FIG. 13 is a view illustrating a manufacturing flow of the second plate assembly PA2 according to an embodiment of the disclosure.

Referring to FIG. 13, in a first operation 1301, the second plate 62 may be manufactured. In a second operation 1302, the fourth plate 64 may be manufactured. In a third operation 1303, the second plate 62 and the fourth plate 64 may be coupled.

The first operation 1301 or the second operation 1302 may include computer numerical control (CNC), die casting, or pressing.

The second operation 1302 may further include cutting (e.g., CNC) the fourth end portion 64A of the fourth plate 64 such that the fourth end portion 64A has a relatively smaller thickness than other portions of the fourth plate 64.

The third operation 1303 may include welding between the second plate 62 and the fourth plate 64.

The third operation 1303 may further include deforming the bent angle of the second end portion 62A to suppress or prevent the fourth end portion 64A of the fourth plate 64 inserted into the second end portion 62A of the second plate 62 from being separated from the second end portion 62A (see the cross-sectional view taken along line D-D').

The third operation 1303 may further include surface finishing of the second plate assembly PA2.

To facilitate insertion of the fourth end portion 64A of the fourth plate 64 into the second end portion 62A of the second plate 62, the fourth end portion 64A may have a shape having an inclined surface or a round shape (not separately illustrated).

The first plate assembly PA1 (see FIG. 4), the third plate assembly PA3 (see FIG. 4), or the fourth plate assembly PA4 (see FIG. 4) may be manufactured through substantially the same or similar manner to the second plate assembly PA2.

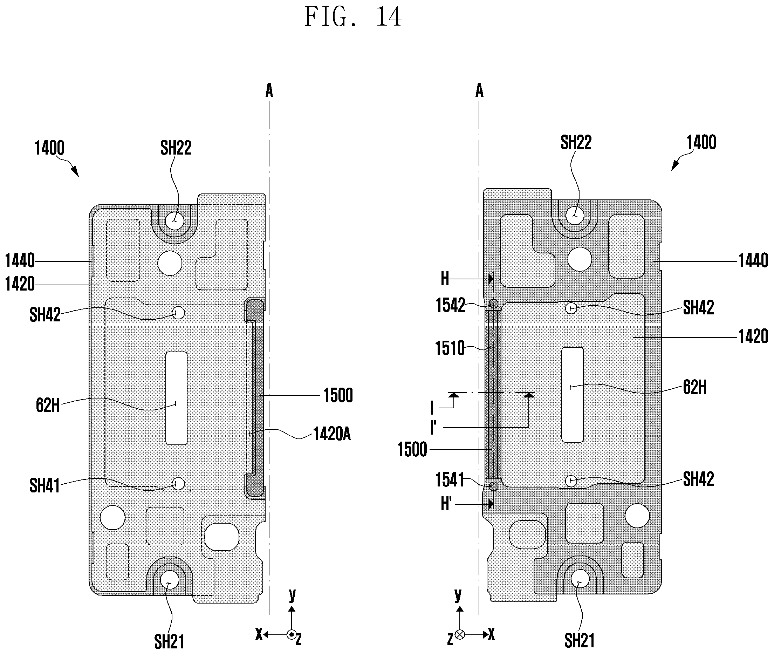

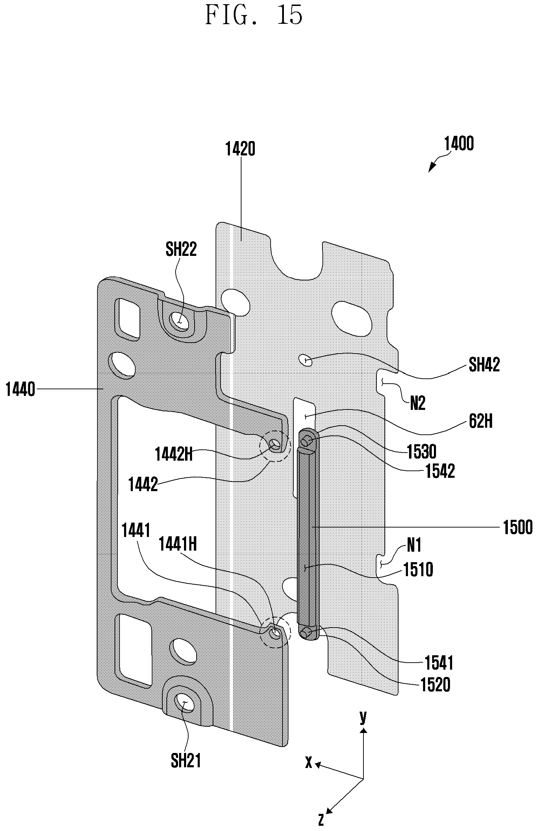

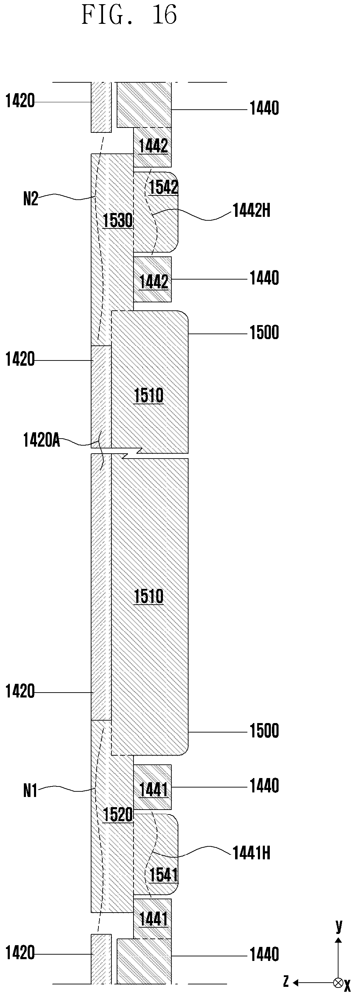

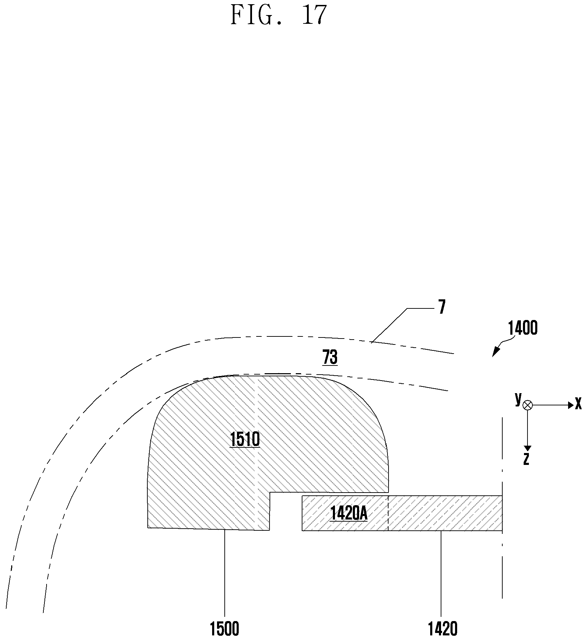

FIG. 14 is a view illustrating a second plate assembly 1400 according to an embodiment of the disclosure. FIG. 15 is an exploded perspective view of the second plate assembly 1400 according to an embodiment of the disclosure. FIG. 16 is a cross-sectional view of the second plate assembly 1400 according to an embodiment of the disclosure taken along line H-H' in FIG. 14. FIG. 17 is a cross-sectional view of the second plate assembly 1400 according to an embodiment of the disclosure taken along line I-I' in FIG. 14.

Since some components denoted by reference numerals have been described above with reference to the drawings, a description thereof may be omitted.

Referring to FIGS. 14, 15, 16, and 17, the second plate assembly 1400 may include a second plate 1420, a fourth plate 1440, and/or a support 1500.

A second end portion 1420A of the second plate 1420 may be provided to be substantially flat compared to the bent second end portion 62A included in the second plate 62 of FIG. 11.

The fourth plate 1440 may be provided in a form in which the fourth end portion 64A is omitted compared to the fourth plate 64 of FIG. 11.

The support 1500 may replace the second end portion 62A included in the second plate 62 of FIG. 4.

The support 1500 may be supported on the second plate 1420 and the fourth plate 1440 to be disposed on or coupled to a combination of the second plate 1420 and the fourth plate 1440.

The fourth plate 1440 may include a first hole portion 1441 including a first hole 1441H and a second hole portion 1442 including a second hole 1442H. The first hole portion 1441 and the second hole portion 1442 may be spaced apart from each other in the direction of the central axis A of the foldable electronic device 1.

The support 1500 may include a first portion 1510, a second portion 1520, a third portion 1530, a first protrusion 1541, and/or a fourth protrusion 1542.

The first portion 1510 of the support 1500 may be located between the first hole portion 1441 and the second hole portion 1442 of the fourth plate 1440. The first portion 1510 may have a bar shape extending substantially straight in the direction of the central axis A of the foldable electronic device 1.

The first portion 1510 of the support 1500 may be supported by the second end portion 1420A of the second plate 1420. Due to the support of the second end portion 1420A, the straight form of the first portion 1510 can be maintained.

The first portion 1510 of the support 1500 may include a curved surface capable of suppressing or preventing damage to the third area 73 of the first flexible printed circuit board 7 in the folded state of the foldable electronic device 1. The curved surface provided by the first portion 1510 contributes to enabling the third area 73 of the first flexible printed circuit board 7 to be disposed while reducing bending stress in the folded state of the foldable electronic device 1.

The second end portion 1420A of the second plate 1420 may support the first portion 1510 of the support 1500 and may extend not to come into contact with the third area 73 of the first flexible printed circuit board 7 in the folded state of the foldable electronic device 1.

The second portion 1520 and the third portion 1530 of the support 1500 may extend from the first portion 1510. The second plate 1420 may include a first notch N1 aligned with the first hole 1441H in the fourth plate 1440. The second plate 1420 may include a second notch N2 aligned with the second hole 1442H in the fourth plate 1440. The first notch N1 and the second notch N2 may be spaced apart from each other in the direction of the center line A of the foldable electronic device 1 with the second end portion 1420A interposed therebetween. The second portion 1520 of the support 1500 may be located in the first notch N1. The third portion 1530 of the support 1500 may be located in the second notch N2.

The first protrusion 1541 of the support 1500 may extend from the second portion 1520 and may be inserted into the first hole 1441H in the fourth plate 1440. The second protrusion 1542 of the support 1500 may extend from the third portion 1530 and may be inserted into the second hole 1442H in the fourth plate 1440.

The second portion 1520 of the support 1500 extending from one side of the first portion 1510 and the first protrusion 1441, and the third portion 1530 of the support 1500 extending from the other side of the first portion 1510 and the first protrusion 1441 may provide hook fastening of the support 1500 for the combination of the second plate 1420 and the fourth plate 1440. Due to first hook fastening via the second portion 1520 and the first protrusion 1441, second hook fastening via the third portion 1530 and the second protrusion 1442, and support of the second end portion 1420A of the second plate 1420 with respect to the first portion 1510, the support 1500 can be stably disposed on or coupled to the combination of the second plate 1420 and the fourth plate 1440.

An adhesive material (or a bonding material) (not separately illustrated) may be disposed between the first portion 1510 of the support 1500 and the second end portion 1420A of the second plate 1420. The first portion 1510 may be coupled to the second plate 1420 via an adhesive material (or a bonding material).

The support 1500 may include silicon, but may include various other materials without being limited thereto.

Although not separately illustrated, when the first portion 1510 of the support 1500 is coupled to the second end portion 1420A of the second plate 1420 via an adhesive material (or a bonding material), the support 1500 may be provided in a form in which the second portion 1520, the third portion 1530, the first protrusion 1541, and the second protrusion 1542 are omitted, and the fourth plate 1440 may be provided in a form in which the first hole portion 1441 and the second hole portion 1442 are omitted.

Although not separately illustrated, the second end portion 1420A of the second plate 1420 may be inserted into a recess provided in the first portion 1510 of the support 1500.

Although not separately illustrated, the first plate assembly PA1, the third plate assembly PA3, or the fourth plate assembly PA4 of FIG. 4 may be modified in substantially the same or similar manner to the second plate assembly 1400 of FIG. 14.

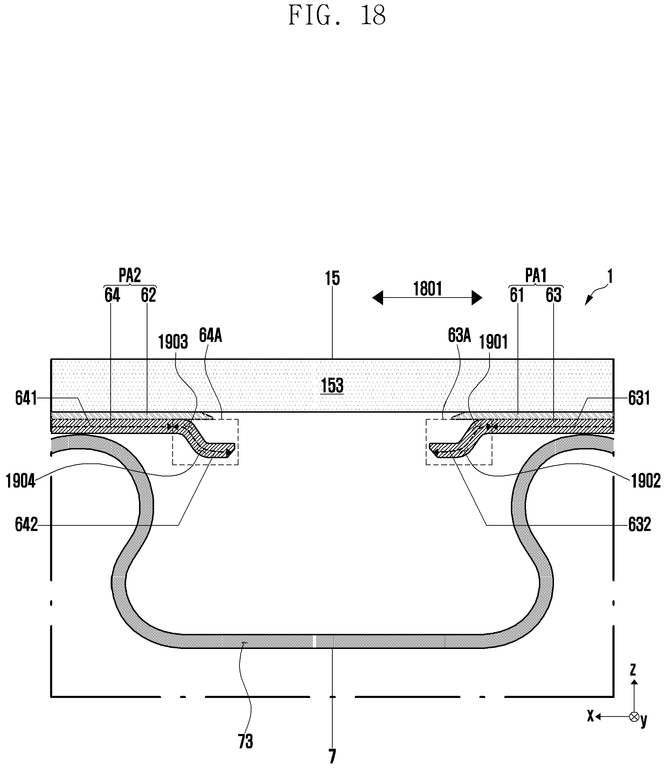

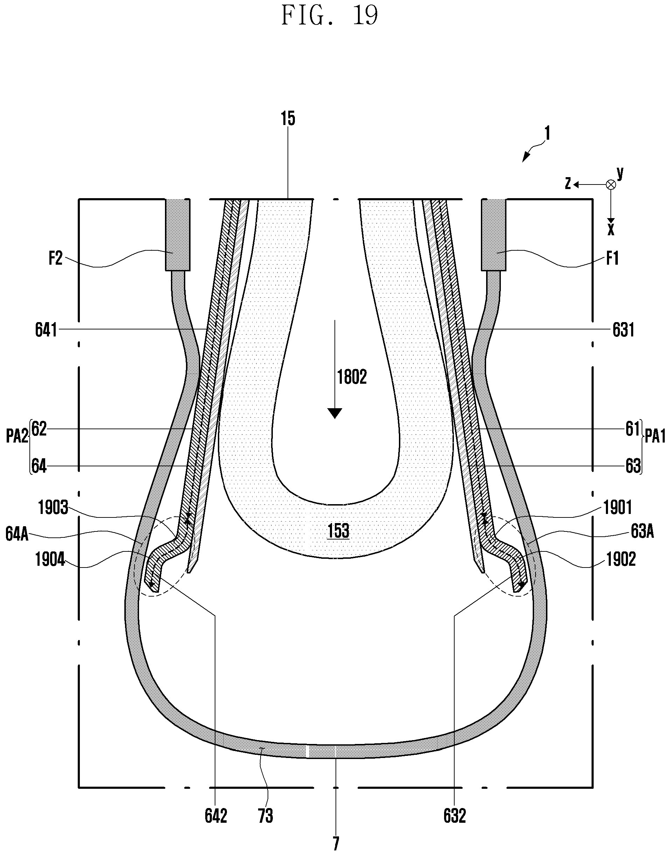

FIG. 18 is a cross-sectional view of a portion of the foldable electronic device 1 according to an embodiment of the disclosure in the unfolded state taken along line D-D' in FIG. 1. FIG. 19 is a cross-sectional view of a portion of the foldable electronic device 1 according to an embodiment of the disclosure in the folded state taken along line E-E' in FIG. 2.

The example of FIGS. 18 and 19 is an embodiment obtained by changing or modifying the example of FIG. 4 and may be interpreted as being included in the scope of various embodiments of the disclosure. The same terms and/or the same reference numerals may be used for components that are at least partially the same as, similar to, or related to those described above with reference to the drawings.

Referring to FIGS. 18 and 19, the foldable electronic device 1 may include a first plate assembly PA1, a second plate assembly PA2, a first display module 15, and/or a first flexible printed circuit board 7.

Instead of screw fastening between the first plate assembly PA1 and the first support plate 1111 of the first frame 111 according to the example of FIG. 4, the first plate assembly PA1 may be operatively connected to the first hinge module 141 and the third hinge module 143. When the foldable electronic device 1 switches between the unfolded state and the folded state, the first plate assembly PA1 may move in response to the movement of the first hinge module 141 and the third hinge module 143.

Instead of screw fastening between the second plate assembly PA2 and the second support plate 1211 of the second frame 121 according to the example of FIG. 4, the second plate assembly PA2 may be operatively connected to the first hinge module 141 and the third hinge module 143. When the foldable electronic device 1 switches between the unfolded state and the folded state, the second plate assembly PA2 may move in response to the movement of the first hinge module 141 and the third hinge module 143.

Instead of screw fastening between the third plate assembly PA3 and the first support plate 1111 of the first frame 111 according to the example of FIG. 4, the third plate assembly PA3 may be operatively connected to the second hinge module 142 and the third hinge module 143. When the foldable electronic device 1 switches between the unfolded state and the folded state, the third plate assembly PA3 may move in response to the movement of the second hinge module 142 and the third hinge module 143.

Instead of screw fastening between the fourth plate assembly PA4 and the second support plate 1211 of the second frame 121 according to the example of FIG. 4, the fourth plate assembly PA4 may be operatively connected to the second hinge module 142 and the third hinge module 143. When the foldable electronic device 1 switches between the unfolded state and the folded state, the fourth plate assembly PA4 may move in response to the movement of the second hinge module 142 and the third hinge module 143.

When viewed in the direction of the center line A (see FIG. 1) of the foldable electronic device 1 in the unfolded state of the foldable electronic device 1, the first display module 15 may be arranged to be flat in a first direction 1801. When viewed in the direction of the center line A (see FIG. 1) of the foldable electronic device 1 in the unfolded state of the foldable electronic device 1, the third display area 153 may extend the first display area 151 (see FIG. 1) and the second display area 152 (see FIG. 1) to be substantially smooth and flat. The first hinge module 141, the second hinge module 142, and the third hinge module 143 in FIG. 4 may be configured such that, when the foldable electronic device 1 switches from the folded state to the unfolded state, the first plate assembly PA1 and the second plate assembly PA2 support the third display area 153 of the first display module 15 to be flat. The first hinge module 141, the second hinge module 142, and the third hinge module 143 in FIG. 4 may be configured such that, when the foldable electronic device 1 switches from the folded state to the unfolded state, the third plate assembly PA3 and the fourth plate assembly PA4 support the third display area 153 of the first display module 15 to be flat.

The first hinge module 141, the second hinge module 142, and the third hinge module 143 of FIG. 4 may be configured such that in the unfolded state of the foldable electronic device 1, the first plate assembly PA1 and the second plate assembly PA2 substantially form an angle of about 180 degrees therebetween. The first hinge module 141, the second hinge module 142, and the third hinge module 143 of FIG. 4 may be configured such that in the unfolded state of the foldable electronic device 1, the third plate assembly PA3 (see FIG. 4) and the fourth plate assembly PA4 (see FIG. 4) substantially form an angle of about 180 degrees therebetween.

The first hinge module 141, the second hinge module 142, and the third hinge module 143 of FIG. 4 may be configured such that, when the foldable electronic device 1 switches from the unfolded state to the folded state, the first plate assembly PA1 and the second plate assembly PA2 face each other and form an acute angle therebetween. When the foldable electronic device 1 switches from the unfolded state to the folded state, the space between the first plate assembly PA1 and the second plate assembly PA2 may be provided in a shape that widens toward the hinge housing 13 (see FIG. 4) such that the third display area 153 of the first display module 15 can be disposed therein in a bent shape (e.g., a droplet shape or a dumbbell shape) that can reduce bending stress and/or buckling phenomena.

When viewed in the direction of the center line A (see FIG. 1) of the foldable electronic device 1 in the folded state of the foldable electronic device 1, the first hinge module 141, the second hinge module 142, and the third hinge module 143 of FIG. 4 may be configured such that, in order to make the space between the first plate assembly PA1 and the second plate assembly PA2 widen in a second direction 1802 perpendicular to the first direction 1801, the first plate assembly PA1 forms a first acute angle with respect to the second direction 1802 and the second plate assembly PA2 forms a second acute angle with respect to the second direction 1802. The second direction 1802 may be a direction from the first and second display areas 151 and 152 (see FIG. 4) facing each other toward the third display area 153 in the folded state of the foldable electronic device 1. The first acute angle and the second acute angle may be substantially the same. The first hinge module 141, the second hinge module 142, and the third hinge module 143 of FIG. 4 may be configured such that the third plate assembly PA3 (see FIG. 4) moves in substantially the same manner as the first plate assembly PA1. The first hinge module 141, the second hinge module 142, and the third hinge module 143 of FIG. 4 may be configured such that the fourth plate assembly PA4 (see FIG. 4) moves in substantially the same manner as the second plate assembly PA2.

In the folded state of the foldable electronic device 1, the first display area 151 (see FIG. 4) and the second display area 152 (see FIG. 4) of the first display module 15 may face each other. In the folded state of the foldable electronic device 1, the third display area 153 of the first display module 15 may be located between the first plate assembly PA1 and the second plate assembly PA2 in a bent shape. In the folded state of the foldable electronic device 1, the third display area 153 of the first display module 15 may be located between the third plate assembly PA3 (see FIG. 4) and the fourth plate assembly PA4 (see FIG. 4) in a bent shape. In the folded state of the foldable electronic device 1, the third display area 153 may be disposed between the first and third plate assemblies PA1 and PA3 and the second and fourth plate assemblies PA2 and PA4 in a bent shape (e.g., a droplet shape or a dumbbell shape) capable of reducing bending stress and/or buckling phenomena while being supported by the first and third plate assemblies PA1 and PA3 and the second and fourth plate assemblies PA2 and PA4. In the folded state of the foldable electronic device 1, the third display area 153 may be disposed in a bent shape (e.g., a droplet shape or a dumbbell shape) capable of reducing collision (e.g., bending stress) between tensile stress generated in one side area of the third display area 153 with reference to a neutral plane inside the third display area 153 and compressive stress generated in the other one side area of the third display area 153. The third display area 153 disposed in the bent shape in the folded state of the foldable electronic device 1 may be provided (or formed) in a substantially symmetrical shape with reference to the center line A (se FIG. 1) of the foldable electronic device 1.

An integrated or single plate may be provided to replace the first plate 61 of the first plate assembly PA1 and the fifth plate 65 (see FIG. 4) of the third plate assembly PA3 (see FIG. 4).

An integrated or single plate may be provided to replace the third plate 63 of the first plate assembly PA1 and the seventh plate 67 of the third plate assembly PA3 (see FIG. 4).

An integrated or single plate may be provided to replace the second plate 62 of the second plate assembly PA2 and the sixth plate 66 (see FIG. 4) of the fourth plate assembly PA4 (see FIG. 4).

An integrated or single plate may be provided to replace the fourth plate 64 of the second plate assembly PA2 and the eighth plate 68 of the fourth plate assembly PA4 (see FIG. 4).

The first fixing portion F1 of the first flexible printed circuit board 7 may be located between the first plate assembly PA1 and the first support plate 1111 (see FIG. 4). The first fixing portion F1 may be disposed on or coupled to the first support plate 1111 (see FIG. 4).

The second fixing portion F2 of the first flexible printed circuit board 7 may be located between the second plate assembly PA2 and the second support plate 1211 (see FIG. 4). The second fixing portion F2 may be disposed on or coupled to the second support plate 1211 (see FIG. 4).

The third fixing portion F3 (see FIG. 8) of the second flexible printed circuit board 8 may be located between the third plate assembly PA3 (see FIG. 4) and the first support plate 1111 (see FIG. 4). The third fixing portion F3 may be disposed on or coupled to the first support plate 1111 (see FIG. 4).

The fourth fixing portion F4 of the second flexible printed circuit board 8 may be located between the fourth plate assembly PA4 and the second support plate 1211 (see FIG. 4). The fourth fixing portion F4 may be disposed on or coupled to the second support plate 1211 (see FIG. 4).

The third area 73 of the first flexible printed circuit board 7 may have a length within a predetermined range. When the third area 73 has a length within the predetermined range, it may be helpful for the third area 73 to be disposed within a limited space in a predetermined shape capable of reducing bending stress in the unfolded state of the foldable electronic device 1. When the third area 73 has a length within the predetermined range, the third area 73 may avoid interference with the first and second plate assemblies PA1 and PA2 in the folded state of the foldable electronic device 1. For example, compared to a comparative example (e.g., see FIG. 9) in which the first plate assembly PA1 and the second plate assembly PA2 are arranged substantially in parallel to each other in the folded state of the foldable electronic device 1, the third area 73 of the first flexible printed circuit board 7 may be provided (formed) in a greater length in order to avoid interference with the first plate assembly PA1 and the second plate assembly PA2.

The third plate 63 of the first plate assembly PA1 may include a third end portion 63A that is located to support the third area 73 of the first flexible printed circuit board 7 when the foldable electronic device 1 switches from the unfolded state to the folded state.

The third end portion 63A of the third plate 63 included in the first plate assembly PA1 may be in contact with the third area 73 of the first flexible printed circuit board 7 in the folded state of the foldable electronic device 1. For example, in the folded state of the foldable electronic device 1, the third end portion 63A of the third plate 63 may support the third area 73 of the first flexible printed circuit board 7. When the foldable electronic device 1 switches from the unfolded state to the folded state, the third area 73 of the first flexible printed circuit board 7 may be deformed while being supported by the third end portion 63A of the third plate 63.

The third end portion 63A of the third plate 63 included in the first plate assembly PA1 may include a first bending portion 1901 and a second bending portion 1902 to have a curved surface capable of reducing bending stress of the third area 73 while suppressing the third area 73 of the first flexible printed circuit board 7 from being closer to the first plate 61 in the folded state of the foldable electronic device 1. The first bending portion 1901 and the second bending portion 1902 may be bent in substantially opposite directions. The third end portion 63A including the first bending portion 1901 and the second bending portion 1902 bent in the opposite directions may be referred to as a "first S bending portion" or a "first Z bending portion".

The third plate 63 may include a third flat surface section 631 and a third curved surface section 632 when viewed in a cross section perpendicular to the center line A of the foldable electronic device 1. The third curved surface section 632 of the third plate 63 may be bent and extended from the third flat surface section 631 to include the first bending portion 1901 and the second bending portion 1902. The third end portion 63A of the third plate 63 may include the third curved surface section 632.

The fourth plate 64 of the second plate assembly PA2 may include a fourth end portion 64A that is located to support the third area 73 of the first flexible printed circuit board 7 when the foldable electronic device 1 switches from the unfolded state to the folded state.

The fourth end portion 64A of the fourth plate 64 included in the second plate assembly PA2 may be in contact with the third area 73 of the first flexible printed circuit board 7 in the folded state of the foldable electronic device 1.. For example, in the folded state of the foldable electronic device 1, the fourth end portion 64A of the fourth plate 64 may support the third area 73 of the first flexible printed circuit board 7. When the foldable electronic device 1 switches from the unfolded state to the folded state, the third area 73 of the first flexible printed circuit board 7 may be deformed while being supported by the fourth end portion 64A of the fourth plate 64.

The fourth end portion 64A of the fourth plate 64 included in the second plate assembly PA2 may include a third bending portion 1903 and a fourth bending portion 1904 to have a curved surface capable of reducing bending stress of the third area 73 while suppressing the third area 73 of the first flexible printed circuit board 7 from being closer to the second plate 62 in the folded state of the foldable electronic device 1. The third bending portion 1903 and the fourth bending portion 1904 may be bent in substantially opposite directions. The fourth end portion 64A including the third bending portion 1903 and the fourth bending portion 1904 bent in the opposite directions may be referred to as a "second S bending portion" or a "second Z bending portion".

The fourth plate 64 may include a fourth flat surface section 641 and a fourth curved surface section 642 when viewed in a cross section perpendicular to the center line A of the foldable electronic device 1. The fourth curved surface section 642 of the fourth plate 64 may be bent and extended from the third flat surface section 641 to include the third bending portion 1903 and the fourth bending portion 1904. The fourth end portion 64A of the fourth plate 64 may include the fourth curved surface section 642.

In the unfolded state of the foldable electronic device 1, the first plate 61 and the second plate 62 may support the third display area 153 of the first display module 15 to be flat. In the folded state of the foldable electronic device 1, the first plate 61 and the second plate 62 may face each other. In the folded state of the foldable electronic device 1, the third display area 153 may be supported by the first plate 61 and the second plate 62 between the first plate 61 and the second plate 62 to be disposed in a bent shape (e.g., a droplet shape or a dumbbell shape) capable of reducing bending stress and/or buckling phenomenon.

The third end portion 63A of the third plate 63 and the fourth end portion 64A of the fourth plate 64 may be provided (formed) to be substantially symmetrical to each other with reference to the center line A of the foldable electronic device 1.

In the folded state of the foldable electronic device 1, the third area 73 of the first flexible printed circuit board 7 may be supported and stably disposed on the third end portion 63A of the third plate 63 and the fourth end portion 64A of the fourth plate 64.

The seventh end portion (not separately illustrated) included in the seventh plate 67 (see FIG. 4) of the third plate assembly PA3 relative to the sixth area 83 (see FIG. 4) of the second flexible printed circuit board 8 may be implemented in substantially the same manner as the third end portion 63A included in the third plate 63 of the first plate assembly PA1 relative to the third area 73 of the first flexible printed circuit board 7. The eighth end portion (not separately illustrated) included in the eighth plate 68 (see FIG. 4) of the fourth plate assembly PA4 relative to the sixth area 83 (see FIG. 4) of the second flexible printed circuit board 8 may be implemented in substantially the same manner as the fourth end portion 64A included in the fourth plate 64 of the second plate assembly PA2 relative to the third area 73 of the first flexible printed circuit board 7. In the folded state of the foldable electronic device 1, the sixth area 83 of the second flexible printed circuit board 8 may be supported and stably disposed on the seventh end portion of the seventh plate 67 and the eight end portion 64A of the eight plate 68.

According to an aspect of the disclosure, a foldable electronic device 1 includes a foldable housing 10 including a first housing 11, a second housing 12, and a hinge 14 configured to interconnect the first housing 11 and the second housing 12. The foldable electronic device 1 includes a flexible printed circuit board (e.g., the first flexible printed circuit board 7) extending across the hinge 14. The hinge 14 includes a first plate 61 and a second plate 62. The first plate 61 includes a first end portion 61A including a first curved surface configured to support the flexible printed circuit board when the foldable housing is in the folded state. The second plate 62 includes a second end portion 62A including a second curved surface configured to support the flexible printed circuit board when the foldable housing is in a folded state.

The foldable electronic device 1 may further include a flexible display module (e.g., the first display module 15) disposed in the foldable housing 10. The flexible display module may include a first display area 151 disposed on the first housing 11, a second display area 152 disposed on the second housing 12, and a third display area 153 extending the first display area 151 and the second display 152. When the foldable housing 10 is in the folded state, the first display area 151 and the second display area 152 may face each other, and the third display area 153 may be bent. The hinge 14 may be configured such that, when the foldable housing 10 is in an unfolded state, the first plate 61 and the second plate 62 support the third display area 153 flat. The hinge 14 may be configured such that, when the foldable housing 10 is in the folded state, the first plate 61 and the second plate 62 face each other with the third display area 153 interposed therebetween.

The hinge 14 may be configured such that, when the foldable housing 10 is in the folded state, the first plate 61 and the second plate 62 are arranged in parallel to each other.

The flexible display module (e.g., the first display module 15) may be arranged flat in a first direction 1801 when viewed in the direction of the folding axis (e.g., the center line A) of the foldable housing 10 when the foldable housing 10 is in the unfolded state (see FIG. 18). The hinge 14 may be configured such that, when viewed in the direction of the folding axis when the foldable housing 10 is in the folded state, the first plate 61 and the second plate 62 form an acute angle with respect to a second direction 1802 that is perpendicular to the first direction 1801 and is directed from the first and second display areas 151 and 152 toward the third display area 153. When the device is in the folded state, the space between the first plate 61 and the second plate 62 may widen in the second direction (see FIG. 19).

The first end portion 61A and the second end portion 62A may face each other and are closer to each other when the foldable housing 10 is in the unfolded state of than when foldable housing 10 is in the folded state.

The flexible printed circuit board (e.g., the first flexible printed circuit board 7) may include a first rigid portion (e.g., the first fixing portion F1), a second rigid portion (e.g., the second fixing portion F2), a first connector 7A, a second connector 7B, a first area 71, a second area 72, and/or a third area 73. The first rigid portion may be located between the first plate 61 and the first housing 11. The second rigid portion may be located between the second plate and the second housing 12. The first connector 7A may be electrically connected to a first element located in the first housing 11. The second connector 7B may be electrically connected to a second element located in the second housing 12. The first area 71 may extend the first rigid portion and the first connector 7A. The second area 72 may extend the second rigid portion and the second connector 7B. The third area 73 may extend the first rigid portion and the second rigid portion and may cross the hinge 14.

The first rigid portion (e.g., the first fixing portion F1) may be coupled to the first housing 11, and the second rigid portion (e.g., the second fixing portion F2) may be coupled to the second housing 12.

The first rigid portion (e.g., the first fixing portion F1) may be coupled to the first plate 61, and the second rigid portion (e.g., the second fixing portion F2) may be coupled to the second plate 62.

The foldable electronic device 1 may further include a third plate 63 and a fourth plate 64. The third plate 63 may be at least partially located between the first plate 61 and the first housing 11 and may be coupled to the first plate 61. The fourth plate 64 may be at least partially located between the second plate 62 and the second housing 12 and may be coupled to the second plate 62. The first rigid portion (e.g., the first fixing portion F1) may be inserted into an opening 63H in the third plate 63 and coupled to the first plate 61. The second rigid portion (e.g., the second fixing portion F2) may be inserted into an opening 64H in the fourth plate 64 and coupled to the second plate 62.

The first plate 61 and the third plate 63 may be coupled through welding. The second plate 62 and the fourth plate 64 may be coupled through welding. The first plate 61 may be coupled to the first housing 11 through screw fastening. The second plate 62 may be coupled to the second housing 11 through screw fastening.

The first end portion 61A may be disposed to surround a third end portion 63A of the third plate 63 to have the first curved surface configured to support the flexible printed circuit board (e.g., the first flexible printed circuit board 7) when the foldable housing 10 is in the folded state. The second end portion 62A may be disposed to surround a fourth end portion 64A of the fourth plate 64 to have the second curved surface configured to support the flexible printed circuit board when the foldable housing 10 is in the folded state.

The first end portion 61A may include a first bent portion 1901 and a second bent portion 1902, which are bent in opposite directions to have the first curved surface configured to support the flexible printed circuit board (e.g., the first flexible printed circuit board 7) when the foldable housing 10 is in the folded state. The second end portion 62A may include a third bent portion 1903 and a fourth bent portion 1904, which are bent in opposite directions to have the second curved surface configured to support the flexible printed circuit board when the foldable housing 10 is in the folded state.

The width W1 of the first end portion 61A or the second end portion 62A extending in the direction of the folding axis (e.g., the center line A) may be configured to be greater than the width W2 of the third area 73 extending in the direction of the folding axis.

The first curved surface and the second curved surface may be formed symmetrically with respect to the folding axis (e.g., the first center line A) of the foldable housing 10.

The hinge 14 may include a first hinge module 141, a second hinge module 142, and a third hinge module 143 between the first hinge module 141 and the second hinge module 142. The first plate 61 and the second plate 62 may be located at least between the first hinge module 141 and the third hinge module 143.

The embodiments of the disclosure described and shown in the specification and the drawings are merely specific examples that have been presented to easily explain the technical contents of the disclosure and help understanding of the disclosure, and are not intended to limit the scope of the disclosure. Therefore, the scope of the disclosure should be construed to include, in addition to the embodiments disclosed herein, all changes and modifications derived on the basis of the technical idea of the disclosure. Additionally, it will be appreciated that any embodiment(s) set forth herein may be used with any other embodiment(s) set forth herein.

## Claims

1. A foldable electronic device (1) comprising:
a foldable housing (10) comprising a first housing (11), a second housing (12), and a hinge (14) configured to interconnect the first housing (11) and the second housing (12); and
a flexible printed circuit board (7) extending across the hinge (14),
wherein the hinge (14) comprises a first plate (61) and a second plate (62), **characterized in that**:
the first plate (61) comprises a first end portion (61A) comprising a first curved surface configured to support the flexible printed circuit board (7) in a folded state of the foldable housing (10), and
the second plate (62) comprises a second end portion (62A) comprising a second curved surface configured to support the flexible printed circuit board (7) when the foldable housing is in the folded state.

2. The foldable electronic device according to claim 1, further comprising a flexible display module (15) disposed in the foldable housing (10),
wherein the flexible display module (15) comprises a first display area (151) disposed on the first housing (11), a second display area (152) disposed on the second housing (12), and a third display area (153) extending the first display area (151) and the second display (152),
wherein, in the folded state, the first display area (151) and the second display area (152) face each other, and the third display area (153) is bent,
wherein the hinge (14) is configured such that, in an unfolded state, the first plate (61) and the second plate (62) support the third display area (153) flat, and
wherein the hinge (14) is configured such that, in the folded state, the first plate (61) and the second plate (62) face each other with the third display area (153) interposed therebetween.

3. The foldable electronic device according to claim 1 or 2, wherein the hinge (14) is configured such that, in the folded state, the first plate (61) and the second plate (62) are arranged in parallel to each other.

4. The foldable electronic device according to any one of claims 1 to 2, wherein the flexible display module (15) is arranged flat in a first direction (1801) when viewed in a direction of a folding axis (A) of the foldable housing (10) in an unfolded state of the foldable housing (10),
wherein the hinge (14) is configured such that, when viewed in the direction of the folding axis (A) when the foldable housing (10) is in the folded state, the first plate (61) and the second plate (62) form an acute angle with respect to a second direction (1802) that is perpendicular to the first direction (1801) and is directed from the first and second display areas (151, 152) toward the third display area (153), and
wherein, when the device is in the folded state, a space between the first plate (61) and the second plate (62) widens in the second direction (1802).

5. The foldable electronic device according to any one of claims 1 to 4, wherein the first end portion (61A) and the second end portion (62A) face each other and are closer to each other in an unfolded state than in the folded state.

6. The foldable electronic device according to any one of claims 1 to 5, wherein the flexible printed circuit board (7) comprises:
a first rigid portion (F1) located between the first plate (61) and the first housing (11);
a second rigid portion (F2) located between the second plate (62) and the second housing (12);
a first connector (7A) electrically connected to a first element located in the first housing (11);
a second connector (7B) electrically connected to a second element located in the second housing (12);
a first area (71) extending between the first rigid portion (F1) and the first connector (7A);
a second area (72) extending between the second rigid portion (F2) and the second connector (7B); and
a third area (73) disposed between the first rigid portion (F1) and the second rigid portion (F2) and extending across the hinge (14).

7. The foldable electronic device according to claim 6, wherein the first rigid portion (F1) is coupled to the first housing (11), and the second rigid portion (F2) is coupled to the second housing (12).

8. The foldable electronic device according to claim 6, wherein the first rigid portion (F1) is coupled to the first plate (61), and the second rigid portion (F2) is coupled to the second plate (62).

9. The foldable electronic device according to claim 8, further comprising:
a third plate (63) located at least partially between the first plate (61) and the first housing (11) and coupled to the first plate (61); and
a fourth plate (64) located at least partially between the second plate (62) and the second housing (12) and coupled to the second plate (62),
wherein the first rigid portion (F1) is inserted into an opening (63H) in the third plate (63) and coupled to the first plate (61), and
wherein the second rigid portion (F2) is inserted into an opening (64H) in the fourth plate (64) and coupled to the second plate (62).

10. The foldable electronic device according to claim 9, wherein the first plate (61) and the third plate (63) are coupled through welding,
wherein the second plate (62) and the fourth plate (64) are coupled through welding,
wherein the first plate (61) is coupled to the first housing (11) through screw fastening, and
wherein the second plate (62) is coupled to the second housing (11) through screw fastening.

11. The foldable electronic device according to claim 9 or 10, wherein the first end portion (61A) is disposed to, in the folded state, surround a third end portion (63A) of the third plate (63) to have the first curved surface configured to support the flexible printed circuit board (7), and
wherein the second end portion (62A) is disposed to, in the folded state, surround a fourth end portion (64A) of the fourth plate (64) to have the second curved surface configured to support the flexible printed circuit board (7).

12. The foldable electronic device according to any one of claims 1 to 10, wherein the first end portion (61A) comprises a first bent portion (1901) and a second bent portion (1902) which are bent in opposite directions to have the first curved surface configured to support the flexible printed circuit board (7) in the folded state, and
wherein the second end portion (62A) comprises a third bent portion (1903) and a fourth bent portion (1904) which are bent in opposite directions to have the second curved surface configured to support the flexible printed circuit board (7) in the folded state.

13. The foldable electronic device according to any one of claims 6 to 12, wherein a width (W1) of the first end portion (61A) or the second end portion (62A) extending in the direction of the folding axis (A) is configured to be greater than a width (W2) of the third area (73) extending in the direction of the folding axis (A).

14. The foldable electronic device according to any one of claims 1 to 13, wherein the first curved surface and the second curved surface are formed symmetrically with respect to the folding axis (A) of the foldable housing (10).

15. The foldable electronic device according to any one of claims 1 to 14, wherein the hinge (14) comprises a first hinge module (141), a second hinge module (142), and a third hinge module (143) between the first hinge module (141) and the second hinge module (142), and
wherein the first plate (61) and the second plate (62) are located at least between the first hinge module (141) and the third hinge module (143).

## Patentansprüche

1. Faltbares elektronisches Gerät (1), umfassend:
ein faltbares Gehäuse (10), umfassend ein erstes Gehäuse (11), ein zweites Gehäuse (12) und ein Scharnier (14), das dazu konfiguriert ist, das erste Gehäuse (11) und das zweite Gehäuse (12) miteinander zu verbinden; und
eine flexible Leiterplatte (7), die sich über das Scharnier (14) erstreckt,
wobei das Scharnier (14) eine erste Platte (61) und eine zweite Platte (62) umfasst, **dadurch gekennzeichnet, dass**:
die erste Platte (61) einen ersten Endabschnitt (61A) umfasst, der eine erste gekrümmte Oberfläche umfasst, die dazu konfiguriert ist, die flexible Leiterplatte (7) in einem gefalteten Zustand des faltbaren Gehäuses (10) zu stützen, und
die zweite Platte (62) einen zweiten Endabschnitt (62A) umfasst, der eine zweite gekrümmte Oberfläche umfasst, die so konfiguriert ist, dass sie die flexible Leiterplatte (7) stützt, wenn sich das faltbare Gehäuse im gefalteten Zustand befindet.

2. Faltbares elektronisches Gerät nach Anspruch 1, umfassend ferner ein flexibles Anzeigemodul (15), das in dem faltbaren Gehäuse (10) angeordnet ist,
wobei das flexible Anzeigemodul (15) einen ersten Anzeigebereich (151), der auf dem ersten Gehäuse (11) angeordnet ist, einen zweiten Anzeigebereich (152), der auf dem zweiten Gehäuse (12) angeordnet ist, und einen dritten Anzeigebereich (153) umfasst, der sich über den ersten Anzeigebereich (151) und die zweite Anzeige (152) erstreckt,
wobei im gefalteten Zustand der erste Anzeigebereich (151) und der zweite Anzeigebereich (152) einander gegenüberliegen und der dritte Anzeigebereich (153) gebogen ist,
wobei das Scharnier (14) so konfiguriert ist, dass im entfalteten Zustand die erste Platte (61) und die zweite Platte (62) den dritten Anzeigebereich (153) flach abstützen, und
wobei das Scharnier (14) so konfiguriert ist, dass im gefalteten Zustand die erste Platte (61) und die zweite Platte (62) einander gegenüberliegen, wobei der dritte Anzeigebereich (153) zwischen ihnen angeordnet ist.

3. Faltbares elektronisches Gerät nach Anspruch 1 oder 2, wobei das Scharnier (14) so konfiguriert ist, dass im gefalteten Zustand die erste Platte (61) und die zweite Platte (62) parallel zueinander angeordnet sind.

4. Faltbares elektronisches Gerät nach einem der Ansprüche 1 bis 2, wobei das flexible Anzeigemodul (15) in einer ersten Richtung (1801) flach angeordnet ist, wenn es in Richtung einer Faltachse (A) des faltbaren Gehäuses (10) in einem entfalteten Zustand des faltbaren Gehäuses (10) betrachtet wird,
wobei das Scharnier (14) so konfiguriert ist, dass, wenn man in Richtung der Faltachse (A) blickt, wenn sich das faltbare Gehäuse (10) im gefalteten Zustand befindet, die erste Platte (61) und die zweite Platte (62) einen spitzen Winkel in Bezug auf eine zweite Richtung (1802) bilden, die senkrecht zur ersten Richtung (1801) verläuft und von dem ersten und dem zweiten Anzeigebereich (151, 152) zu dem dritten Anzeigebereich (153) gerichtet ist, und
wobei sich, wenn sich das Gerät in dem gefalteten Zustand befindet, ein Raum zwischen der ersten Platte (61) und der zweiten Platte (62) in der zweiten Richtung (1802) erweitert.

5. Faltbares elektronisches Gerät nach einem der Ansprüche 1 bis 4, wobei der erste Endabschnitt (61A) und der zweite Endabschnitt (62A) einander gegenüberliegen und in einem entfalteten Zustand näher beieinander liegen als in dem gefalteten Zustand.

6. Faltbares elektronisches Gerät nach einem der Ansprüche 1 bis 5, wobei die flexible Leiterplatte (7) Folgendes umfasst:
einen ersten starren Abschnitt (F1), der sich zwischen der ersten Platte (61) und dem ersten Gehäuse (11) befindet;
einen zweiten starren Abschnitt (F2), der sich zwischen der zweiten Platte (62) und dem zweiten Gehäuse (12) befindet;
einen ersten Verbinder (7A), der elektrisch mit einem ersten Element verbunden ist, das sich im ersten Gehäuse (11) befindet;
einen zweiten Verbinder (7B), der elektrisch mit einem zweiten Element verbunden ist, das sich im zweiten Gehäuse (12) befindet;
einen ersten Bereich (71), der sich zwischen dem ersten starren Abschnitt (F1) und dem ersten Verbinder (7A) erstreckt;
einen zweiten Bereich (72), der sich zwischen dem zweiten starren Abschnitt (F2) und dem zweiten Verbinder (7B) erstreckt; und
einen dritten Bereich (73), der zwischen dem ersten starren Abschnitt (F1) und dem zweiten starren Abschnitt (F2) angeordnet ist und sich über das Scharnier (14) erstreckt.

7. Faltbares elektronisches Gerät nach Anspruch 6, wobei der erste starre Abschnitt (F1) mit dem ersten Gehäuse (11) und der zweite starre Abschnitt (F2) mit dem zweiten Gehäuse (12) gekoppelt ist.

8. Faltbares elektronisches Gerät nach Anspruch 6, wobei der erste starre Abschnitt (F1) mit der ersten Platte (61) und der zweite starre Abschnitt (F2) mit der zweiten Platte (62) gekoppelt ist.

9. Faltbares elektronisches Gerät nach Anspruch 8, umfassend ferner:
eine dritte Platte (63), die sich zumindest teilweise zwischen der ersten Platte (61) und dem ersten Gehäuse (11) befindet und mit der ersten Platte (61) gekoppelt ist; und
eine vierte Platte (64), die sich zumindest teilweise zwischen der zweiten Platte (62) und dem zweiten Gehäuse (12) befindet und mit der zweiten Platte (62) gekoppelt ist,
wobei der erste starre Abschnitt (F1) in eine Öffnung (63H) in der dritten Platte (63) eingeführt und mit der ersten Platte (61) gekoppelt ist, und
wobei der zweite starre Abschnitt (F2) in eine Öffnung (64H) in der vierten Platte (64) eingeführt und mit der zweiten Platte (62) gekoppelt ist.

10. Faltbares elektronisches Gerät nach Anspruch 9, wobei die erste Platte (61) und die dritte Platte (63) durch Schweißen miteinander gekoppelt sind,
wobei die zweite Platte (62) und die vierte Platte (64) durch Schweißen miteinander gekoppelt sind,
wobei die erste Platte (61) durch Schraubbefestigung mit dem ersten Gehäuse (11) gekoppelt ist, und
wobei die zweite Platte (62) durch Schraubbefestigung mit dem zweiten Gehäuse (11) gekoppelt ist.

11. Faltbares elektronisches Gerät nach Anspruch 9 oder 10, wobei der erste Endabschnitt (61 A) so angeordnet ist, dass er im gefalteten Zustand einen dritten Endabschnitt (63A) der dritten Platte (63) umgibt, um die erste gekrümmte Oberfläche zum Abstützen der flexiblen Leiterplatte (7) zu bilden, und
wobei der zweite Endabschnitt (62A) so angeordnet ist, dass er im gefalteten Zustand einen vierten Endabschnitt (64A) der vierten Platte (64) umgibt, um die zweite gekrümmte Oberfläche zum Abstützen der flexiblen Leiterplatte (7) zu bilden.

12. Faltbares elektronisches Gerät nach einem der Ansprüche 1 bis 10, wobei der erste Endabschnitt (61A) einen ersten gebogenen Abschnitt (1901) und einen zweiten gebogenen Abschnitt (1902) umfasst, die in entgegengesetzte Richtungen gebogen sind, um die erste gekrümmte Oberfläche zum Abstützen der flexiblen Leiterplatte (7) im gefalteten Zustand zu bilden, und
wobei der zweite Endabschnitt (62A) einen dritten gebogenen Abschnitt (1903) und einen vierten gebogenen Abschnitt (1904) umfasst, die in entgegengesetzte Richtungen gebogen sind, um die zweite gekrümmte Oberfläche zum Abstützen der flexiblen Leiterplatte (7) im gefalteten Zustand zu bilden.

13. Faltbares elektronisches Gerät nach einem der Ansprüche 6 bis 12, wobei eine Breite (W1) des ersten Endabschnitts (61A) oder des zweiten Endabschnitts (62A), die sich in Richtung der Faltachse (A) erstreckt, so konfiguriert ist, dass sie größer ist als eine Breite (W2) des dritten Bereichs (73), der sich in Richtung der Faltachse (A) erstreckt.

14. Faltbares elektronisches Gerät nach einem der Ansprüche 1 bis 13, wobei die erste gekrümmte Oberfläche und die zweite gekrümmte Oberfläche symmetrisch in Bezug auf die Faltachse (A) des faltbaren Gehäuses (10) ausgebildet sind.

15. Faltbares elektronisches Gerät nach einem der Ansprüche 1 bis 14, wobei das Scharnier (14) ein erstes Scharniermodul (141), ein zweites Scharniermodul (142) und ein drittes Scharniermodul (143) zwischen dem ersten Scharniermodul (141) und dem zweiten Scharniermodul (142) umfasst, und
wobei die erste Platte (61) und die zweite Platte (62) zumindest zwischen dem ersten Scharniermodul (141) und dem dritten Scharniermodul (143) angeordnet sind.

## Revendications

1. Dispositif électronique pliable (1), comprenant :
un boîtier pliable (10) comprenant un premier boîtier (11), un second boîtier (12), et une charnière (14) configurée pour interconnecter le premier boîtier (11) et le second boîtier (12) ; et
une carte de circuit imprimé flexible (7) s'étendant à travers la charnière (14),
dans lequel la charnière (14) comprend une première plaque (61) et une deuxième plaque (62), **caractérisées en ce que** :
la première plaque (61) comprend une première partie d'extrémité (61A) comprenant une première surface incurvée configurée pour soutenir la carte de circuit imprimé flexible (7) dans un état plié du boîtier pliable (10), et
la deuxième plaque (62) comprend une deuxième partie d'extrémité (62A) comprenant une seconde surface incurvée configurée pour soutenir la carte de circuit imprimé flexible (7) lorsque le boîtier pliable est dans l'état plié.

2. Dispositif électronique pliable selon la revendication 1, comprenant en outre un module d'affichage flexible (15) disposé dans le boîtier pliable (10),
dans lequel le module d'affichage flexible (15) comprend une première zone d'affichage (151) disposée sur le premier boîtier (11), une deuxième zone d'affichage (152) disposée sur le second boîtier (12), et une troisième zone d'affichage (153) étendant la première zone d'affichage (151) et le deuxièmeaffichage (152),
dans lequel, dans l'état plié, la première zone d'affichage (151) et la deuxième zone d'affichage (152) se font face, et la troisième zone d'affichage (153) est courbe,
dans lequel la charnière (14) est configurée pour que, dans un état déplié, la première plaque (61) et la deuxième plaque (62) soutiennent la troisième zone d'affichage (153) à plat, et
dans lequel la charnière (14) est configurée pour que, dans l'état plié, la première plaque (61) et la deuxième plaque (62) se fassent face avec la troisième zone d'affichage (153) interposée entre elles.

3. Dispositif électronique pliable selon la revendication 1 ou 2, dans lequel la charnière (14) est configurée pour que, dans l'état plié, la première plaque (61) et la deuxième plaque (62) soient disposées en parallèle l'une à l'autre.

4. Dispositif électronique pliable selon l'une quelconque des revendications1 à 2, dans lequel le module d'affichage flexible (15) est disposé à plat dans une première direction (1801), lorsqu'il est vu dans une direction d'un axe de pliage (A) du boîtier pliable (10) dans un état déplié du boîtier pliable (10),
dans lequel la charnière (14) est configurée pour que, lorsqu'elles sont vues dans direction ' de l'axe de pliage (A) et lorsque le boîtier pliable (10) est dans l'état plié, la première plaque (61) et la deuxième plaque (62) forment un angle aigu par rapport à une seconde direction (1802) qui est perpendiculaire à la première direction (1801) et est dirigée à partir de la première et la deuxième zone d'affichage (151, 152) vers la troisième zone d'affichage (153), et
dans lequel, lorsque le dispositif est dans l'état plié, un espace entre la première plaque (61) et la deuxième plaque (62) s'élargit dans la seconde direction (1802).

5. Dispositif électronique pliable selon l'une quelconque des revendications 1 à 4, dans lequel la première partie d'extrémité (61A) et la deuxième partie d'extrémité (62A) se font face et sont plus proches l'une de l'autre dans un état déplié que celles dans l'état plié.

6. Dispositif électronique pliable selon l'une quelconque des revendications 1 à 5, dans lequel la carte de circuit imprimé flexible (7) comprend :
une première partie rigide (F1) située entre la première plaque (61) et le premier boîtier (11);
une seconde partie rigide (F2) située entre la deuxième plaque (62) et le second boîtier (12);
un premier connecteur (7A) relié électriquement à un premier élément situé dans le premier boîtier (11) ;
un second connecteur (7B) relié électriquement à un second élément situé dans le second boîtier (12) ;
une première zone (71) s'étendant entre la première partie rigide (F1) et le premier connecteur (7A) ;
une deuxième zone (72) s'étendant entre la seconde partie rigide (F2) et le second connecteur (7B) ; et
une troisième zone (73) disposée entre la première partie rigide (F1) et la seconde partie rigide (F2) et s'étendant à travers la charnière (14).

7. Dispositif électronique pliable selon la revendication 6, dans lequel la première partie rigide (F1) est couplée au premier boîtier (11), et la seconde partie rigide (F2) est couplée au second boîtier (12).

8. Dispositif électronique pliable selon la revendication 6, dans lequel la première partie rigide (F1) est couplée à la première plaque (61), et la seconde partie rigide (F2) est couplée à la deuxième plaque (62).

9. Dispositif électronique pliable selon la revendication 8, comprenant en outre :
une troisième plaque (63) située au moins partiellement entre la première plaque (61) et le premier boîtier (11) et couplée à la première plaque (61) ; et
une quatrième plaque (64) située au moins partiellement entre la deuxième plaque (62) et le second boîtier (12) et couplée à la deuxième plaque (62),
dans lequel la première partie rigide (F1) est insérée à l'intérieur d'une ouverture (63H) dans la troisième plaque (63) et couplée à la première plaque (61), et
dans lequel la deuxième partie rigide (F2) est insérée à l'intérieur d'une ouverture (64H) dans la quatrième plaque (64) et couplée à la deuxième plaque (62).

10. Dispositif électronique pliable selon la revendication 9, dans lequel la première plaque (61) et la troisième plaque (63) sont couplées par soudage,
dans lequel la deuxième plaque (62) et la quatrième plaque (64) sont couplées par soudage,
dans lequel la première plaque (61) est couplée au premier boîtier (11) par fixation à vis, et
dans lequel la deuxième plaque (62) est couplée au second boîtier (11) par fixation à vis.

11. Dispositif électronique pliable selon la revendication 9 ou 10, dans lequel la première partie d'extrémité (61A) est disposée pour, dans l'état plié, entourer une troisième partie d'extrémité (63A) de la troisième plaque (63) afin d'avoir la première surface incurvée configurée pour soutenir la carte de circuit imprimé flexible (7), et
dans lequel la deuxième partie d'extrémité (62A) est disposée pour, dans l'état plié, entourer une quatrième partie d'extrémité (64A) de la quatrième plaque (64) afin d'avoir la seconde surface incurvée configurée pour soutenir la carte de circuit imprimé flexible (7).

12. Dispositif électronique pliable selon l'une quelconque des revendications 1 à 10, dans lequel la première partie d'extrémité (61A) comprend une première partie courbe(1901) et une seconde partie courbe(1902) qui sont courbes dans des directions opposées pour avoir la première surface incurvée configurée pour soutenir la carte de circuit imprimé flexible (7) dans l'état plié, et
dans lequel la deuxième partie d'extrémité (62A) comprend une troisième partie courbe(1903) et une quatrième partie courbe(1904) qui sont courbes dans des directions opposées pour avoir la seconde surface incurvée configurée pour soutenir la carte de circuit imprimé flexible (7) dans l'état plié.

13. Dispositif électronique pliable selon l'une quelconque des revendications 6 à 12, dans lequel une largeur (W1) de la première partie d'extrémité (61A) ou de la deuxième partie d'extrémité (62A) s'étendant dans la direction de l'axe de pliage (A) est configurée pour être supérieure à une largeur (W2) de la troisième zone (73) s'étendant dans la direction de l'axe de pliage (A).

14. Dispositif électronique pliable selon l'une quelconque des revendications 1 à 13, dans lequel la première surface incurvée et la seconde surface incurvée sont formées de manière symétrique par rapport à l'axe de pliage (A) du boîtier pliable (10).

15. Dispositif électronique pliable selon l'une quelconque des revendications 1 à 14, dans lequel la charnière (14) comprend un premier module de charnière (141), un deuxième module de charnière (142) et un troisième module de charnière (143) entre le premier module de charnière (141) et le deuxième module de charnière (142), et
dans lequel la première plaque (61) et la deuxième plaque (62) sont situées au moins entre le premier module de charnière (141) et le troisième module de charnière (143).
